# EUROPEAN PATENT APPLICATION

(11) **EP 4 844 034 A1**
(43) Date of publication of application: **25.11.2026**
(21) Application number: 25748820.5
(22) Date of filing: 30.01.2025
(51) Int. Cl.: C09D 11/32, B41J 2/01, B41M 5/00, B41M 5/385, C09D 11/03, C09D 11/17

(54) **INK AND SHEET FOR THERMAL TRANSFER RECORDING**

(30) Priority: 31.01.2024 JP 2024013021; 31.01.2024 JP 2024013022; 31.01.2024 JP 2024013023; 27.01.2025 JP 2025011690
(71) Applicant: Canon Kabushiki Kaisha, Tokyo 146-8501 (JP)
(72) Inventor: SHINTOU, Taichi, Tokyo 146-8501 (JP); SHIROTA, Koromo, Tokyo 146-8501 (JP); SANTO, Tsuyoshi, Tokyo 146-8501 (JP)
(74) Representative: WESER & Kollegen Patentanwälte PartmbB
(86) International application number: PCT/JP2025/003027
(87) International publication number: WO 2025/164730

(57) **Abstract**

An ink contains a medium and carrier particles dyed with a compound represented by General Formula (1) and a compound represented by General Formula (2).

## Description

### Technical Field

The present invention relates to an ink and a thermal transfer recording sheet.

### Background Art

In the apparel industry, a large amount of industrial wastewater generated during the dyeing process for various fabrics has been regarded as a problem from the viewpoint of environmental burden. Therefore, in recent years, digital textile printing methods using an ink jet system or an electrophotographic system have been actively developed as methods capable of providing printed textile products with low energy consumption and at low cost. Examples thereof include a method using an ink containing a pigment, a method using an ink containing resin particles having a dye fixed thereto, and a method using an ink containing a sublimable dye.

Aqueous inks containing a pigment (aqueous pigment inks) are excellent in light fastness, but tend to suffer from low color developability. In addition, with inks containing resin particles having a dye fixed thereto, it is difficult to achieve both light fastness and color developability. For example, Patent Literature 1 discloses an ink for ink jet recording containing, as a colorant, resin particles colored with a coumarin dye. However, studies by the present inventors have revealed that further improvement in light fastness is required.

In the field of writing instruments, particularly ballpoint pens, there has been an increasing demand in response to user requirements for writing feel, start-up performance (initial writing performance), and the ability to continuously provide stable handwriting, depending on differences in ink and functions. Ballpoint pens include various types such as oil-based ballpoint pens, water-based ballpoint pens, and gel-ink ballpoint pens, and are available in various colors such as black, red, blue, yellow, pink, green, and orange. As colorants contained in the ink, dyes, pigments, and mixtures thereof are used. For example, oil-based inks containing a pigment are excellent in handwriting fastness, but have a problem in storage stability in that the pigment tends to aggregate or settle in the ink, and when an oil-based ink in which the pigment has aggregated or settled is used, defects may occur in handwriting. In contrast, oil-based inks containing a dye tend to be inferior in light fastness, although they are less likely to undergo aggregation or settling and are excellent in storage stability as compared with those containing a pigment because the dye tends to dissolve easily in a solvent. For example, Patent Literature 2 reports a ballpoint pen paste (an ink for a writing instrument) containing a methine-based dye or a coumarin-based dye as a colorant. However, studies by the present inventors have revealed that further improvement in light fastness is required.

In an image recording method by a sublimation transfer system using an ink containing a sublimable dye, not only an image having a high optical density is required, but also suppression of color variation due to heat press temperature is required in order to ensure color tone stability when images are repeatedly recorded. For example, Patent Literature 3 reports an example using an ink in which a fluorescent sublimable dye and a non-fluorescent sublimable dye are used in combination. However, studies by the present inventors have revealed that the yellow image density and the stability of image density (color development stability) against differences in heat press temperature are insufficient.

Sublimable dyes can also be used in an image recording method employing a thermal transfer recording system capable of dry-process printing. In the thermal transfer recording system, each coloring material layer is usually made from a mixture of two to three compounds. Therefore, there has been a problem in that fading due to color mixing among compounds of the same color may occur during image recording. Accordingly, studies have been made to inhibit such fading in thermal transfer recording sheets. For example, Patent Literature 4 proposes a solution in which an anti-fading agent is contained in the coloring material layer. However, studies by the present inventors have revealed that further improvement is required with respect to fading due to color mixing of the same color (hereinafter also referred to as "same-color mixing-induced fading").

### Citation List

### Patent Literature

PTL 1: Japanese Patent Laid-Open No. 2022-187337
PTL 2: Japanese Patent Laid-Open No. 8-20669
PTL 3: Japanese Patent Laid-Open No. 2016-190932
PTL 4: Japanese Patent Laid-Open No. 2001-158879

### Summary of Invention

### Technical Problem

It is an object of the present invention to provide an ink having good storage stability and high light fastness. It is another object of the present invention to provide an ink having high optical density and excellent color development stability during heat pressing. It is still another object of the present invention to provide a thermal transfer recording sheet in which fading due to mixing of the same color is inhibited in two different yellow coloring materials used in a yellow coloring material layer of the thermal transfer recording sheet.

### Solution to Problem

According to one aspect of the present invention, there is provided an ink containing a medium and carrier particles dyed with a compound represented by the following General Formula (1) and a compound represented by the following General Formula (2): 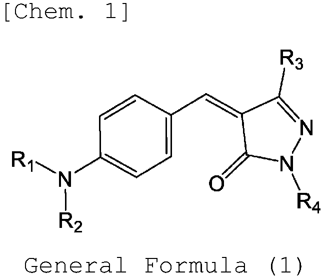 [wherein, in General Formula (1),
R₁ and R₂ each independently represent an alkyl group,
R₃ represents an alkyl group, an aryl group, or an alkoxy group, and
R₄ represents an alkyl group or an aryl group]; and 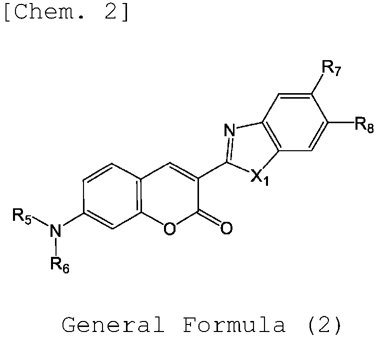 [wherein, in General Formula (2),
   R₅ and R₆ each independently represent an alkyl group,
   R₇ and R₈ each independently represent a hydrogen atom, an alkyl group, an aryl group, an alkoxy group, or a halogen atom,
   X₁ represents O, S, or N-R₉, and R₉ represents a hydrogen atom or an alkyl group].

According to another aspect of the present invention, there is provided an ink containing an aqueous medium, a dispersant, a compound represented by the following General Formula (1), and a compound represented by the following General Formula (2): 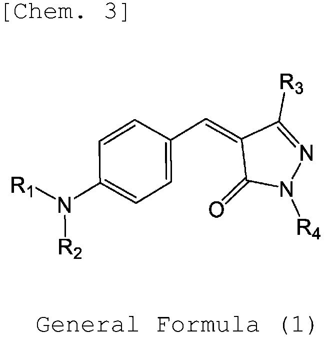 [wherein, in General Formula (1),
R₁ and R₂ each independently represent an alkyl group,
R₃ represents an alkyl group, an aryl group, or an alkoxy group, and
R₄ represents an alkyl group or an aryl group]; and 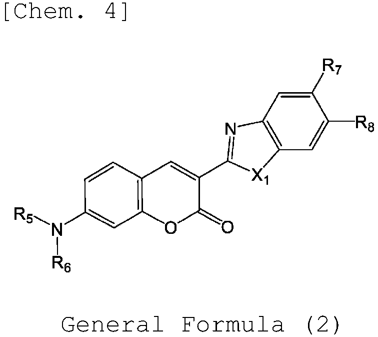 [wherein, in General Formula (2),
   R₅ and R₆ each independently represent an alkyl group,
   R₇ and R₈ each independently represent a hydrogen atom, an alkyl group, an aryl group, an alkoxy group, or a halogen atom,
   X₁ represents O, S, or N-R₉, and R₉ represents a hydrogen atom or an alkyl group].

According to still another aspect of the present invention, there is provided a thermal transfer recording sheet containing a substrate and a yellow coloring material layer disposed on the substrate, in which the yellow coloring material layer contains a compound represented by the following General Formula (1) and a compound represented by the following General Formula (2): 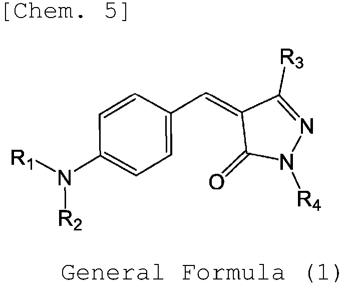 [wherein, in General Formula (1),
R₁ and R₂ each independently represent an alkyl group,
R₃ represents an alkyl group, an aryl group, or an alkoxy group, and
R₄ represents an alkyl group or an aryl group]; and 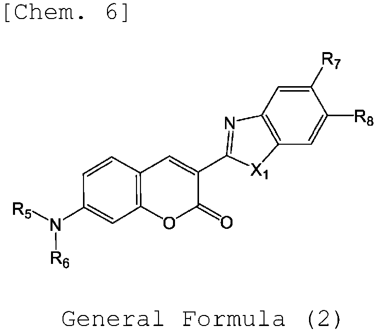 [wherein, in General Formula (2),
   R₅ and R₆ each independently represent an alkyl group,
   R₇ and R₈ each independently represent a hydrogen atom, an alkyl group, an aryl group, an alkoxy group, or a halogen atom,
   X₁ represents O, S, or N-R₉, and R₉ represents a hydrogen atom or an alkyl group].

### Advantageous Effects of Invention

According to one aspect of the present invention, it is possible to provide an ink having good storage stability and high light fastness. According to another aspect of the present invention, it is possible to provide an ink having high optical density and excellent color development stability during heat pressing. According to still another aspect of the present invention, it is possible to provide a thermal transfer recording sheet in which fading due to mixing of the same color is inhibited in two different yellow coloring materials used in a yellow coloring material layer of the thermal transfer recording sheet.

### Description of Embodiments

The present invention will be described in detail below.

### [First Embodiment]

The present inventors have conducted intensive studies in order to solve the above-described problems and have found that the use of a medium and carrier particles dyed with compounds represented by General Formulae (1) and (2) makes it possible to provide an ink having good storage stability and high light fastness.

Hitherto, in the case of an ink containing carrier particles dyed solely with a compound represented by General Formula (1), there has been a problem in storage stability in that aggregation tends to occur. In the case of an ink containing carrier particles dyed solely with a compound represented by General Formula (2), there has been a problem in that the light fastness is low, although aggregation does not occur.

Studies by the present inventors have revealed that an ink containing carrier particles dyed with compounds represented by General Formulae (1) and (2) has good storage stability and high light fastness. Although the mechanism by which the above-described effects are exhibited by a mixture of the compounds represented by General Formulae (1) and (2) has not been clearly understood, the present inventors presume as follows.

This is considered to be because the compounds represented by General Formulae (1) and (2) are of approximately the same size in terms of structure, and the two compounds overlap due to π-π stacking interactions between benzene rings imparted by the dialkylamino groups possessed by the respective compounds. It is believed that, due to this overlap, the two compounds are stabilized, and the above-described effects are thereby exhibited. In particular, in General Formula (2), when X₁ is N-H, the above-described effects are most pronounced because the hydrogen atom of N-H and the oxygen atom of C=O in the coumarin skeleton form a stable six-membered ring structure by hydrogen bonding.

The composition of the ink according to the present embodiment will be described in detail below.

The ink according to the present embodiment contains a medium and carrier particles dyed with compounds represented by General Formulae (1) and (2). The ink according to the present embodiment is suitable as an ink because the use of carrier particles dyed with two specific compounds provides good storage stability and high light fastness.

### [Colorant]

First, the compound represented by the following General Formula (1), which is one of the colorants, will be described: 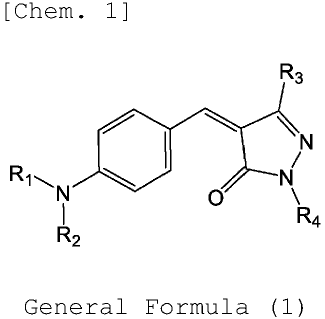 [wherein, in General Formula (1),
R₁ and R₂ each independently represent an alkyl group,
R₃ represents an alkyl group, an aryl group, or an alkoxy group, and
R₄ represents an alkyl group or an aryl group].

Specific examples of the alkyl group for each of R₁ to R₄ in General Formula (1) include, but are not particularly limited to, a methyl group, an ethyl group, a n-propyl group, an iso-propyl group, a n-butyl group, an iso-butyl group, and a tert-butyl group. Among these, a linear or branched alkyl group having 1 to 4 carbon atoms is preferred. In particular, a methyl group or an ethyl group is more preferred because the use of dyed resin particles makes it possible to more easily obtain an ink having good storage stability and high light fastness.

In General Formula (1), the aryl group for each of R₃ and R₄ is not particularly limited, and both an unsubstituted aryl group and an aryl group having a substituent can be used. Examples of the substituent include an alkyl group, an alkoxy group, a carboxamide group, and a sulfonic acid salt group such as sodium sulfonate. Specific examples of the aryl group include a phenyl group, a naphthyl group, a methylphenyl group, a methoxyphenyl group, and a benzenecarboxamide group (aminocarbonylphenyl group). In particular, a phenyl group is more preferred because the use of dyed resin particles makes it possible to more easily obtain an ink having good storage stability and high light fastness.

Examples of the alkoxy group for R₃ in General Formula (1) include, but are not particularly limited to, a methoxy group, an ethoxy group, a propoxy group, and a butoxy group. Among these, an alkoxy group having 1 to 4 carbon atoms is preferred. In particular, a methoxy group or an ethoxy group is more preferred because the use of dyed resin particles makes it possible to more easily obtain an ink having good storage stability and high light fastness.

As illustrated in the following reaction scheme, the compound represented by General Formula (1) has a cis-trans stereoisomer represented by General Formula (3), and such a stereoisomer is within the scope of the present invention. R₁ to R₄ in the reaction scheme are as defined above. In the description of chemical formulae in this paragraph and subsequent paragraphs, only the structure corresponding to General Formula (1) is illustrated, but both cis-trans stereoisomers are intended to be included. The compound represented by General Formula (1) may be a mixture of these stereoisomers.

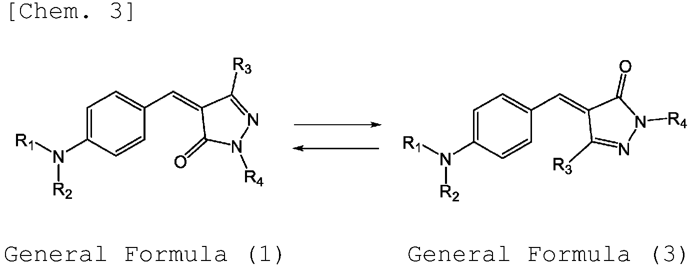

Preferred examples of the compound represented by General Formula (1) include Compounds (1-1) to (1-5) illustrated below, but are not limited to the following compounds.

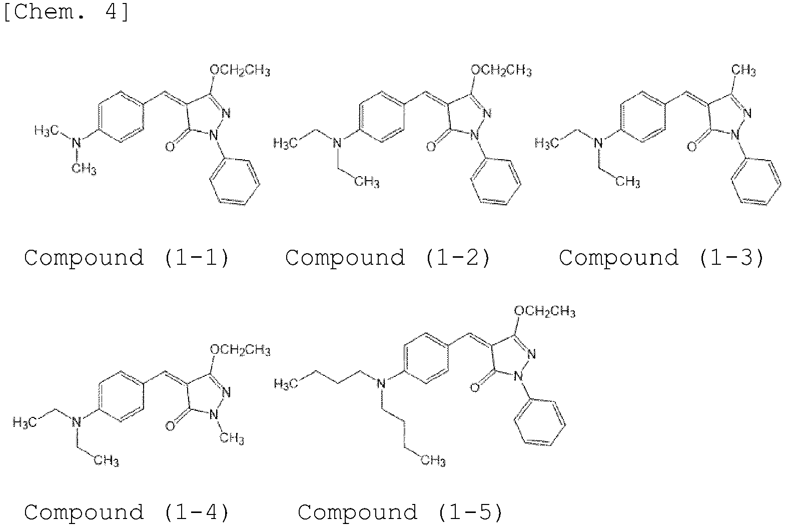

The compounds represented by General Formula (1) may be used alone, or two or more thereof may be used in combination in order to adjust color tone and the like depending on the intended use. Furthermore, the compounds may also be used in combination with known pigments or dyes as long as the effects of the present invention are not impaired. The known pigments or dyes to be combined may be used alone, or two or more thereof may be used in combination.

Among these, a compound represented by General Formula (1) in which R₁ and R₂ are each independently an alkyl group having 1 to 4 carbon atoms and R₃ is an alkoxy group having 1 to 4 carbon atoms is preferred. In particular, Compound (1-2), Compound (1-4), or Compound (1-5) is preferred. The use of resin particles dyed with any one of these compounds makes it possible to more easily obtain an ink having good storage stability and high light fastness.

The compound represented by General Formula (1) can be synthesized by a known method, or a commercially available product thereof can be obtained.

Next, the compound represented by General Formula (2) below, which is another colorant, will be described: 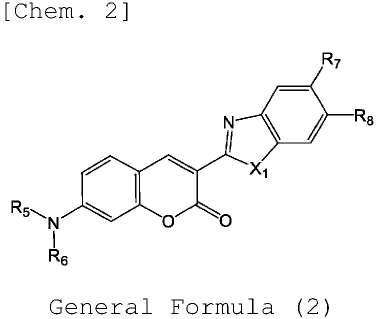 [wherein, in General Formula (2),
R₅ and R₆ each independently represent an alkyl group,
R₇ and R₈ each independently represent a hydrogen atom, an alkyl group, an aryl group, an alkoxy group, or a halogen atom,
X₁ represents O, S, or N-R₉, and R₉ represents a hydrogen atom or an alkyl group].

Specific examples of the alkyl group for each of R₅ and R₆ in General Formula (2) include, but are not particularly limited to, a methyl group, an ethyl group, a n-propyl group, an iso-propyl group, a n-butyl group, an iso-butyl group, and a tert-butyl group. Among these, a linear or branched alkyl group having 1 to 4 carbon atoms is preferred. In particular, a methyl group or an ethyl group is more preferred because the use of dyed resin particles makes it possible to more easily obtain an ink having good storage stability and high light fastness.

Specific examples of the alkyl group for each of R₇ and R₈ in General Formula (2) include, but are not particularly limited to, a methyl group, an ethyl group, a n-propyl group, an iso-propyl group, a n-butyl group, an iso-butyl group, and a tert-butyl group. Among these, a linear or branched alkyl group having 1 to 4 carbon atoms is preferred. In particular, a methyl group or an ethyl group is more preferred because the use of dyed resin particles makes it possible to more easily obtain an ink having good storage stability and high light fastness.

Specific examples of the aryl group for each of R₇ and R₈ in General Formula (2) include, but are not particularly limited to, an unsubstituted phenyl group, a methylphenyl group, and a methoxyphenyl group. Among these, an unsubstituted phenyl group is preferred because the use of dyed resin particles makes it possible to more easily obtain an ink having good storage stability and high light fastness.

Specific examples of the alkoxy group for each of R₇ and R₈ in General Formula (2) include, but are not particularly limited to, a methoxy group, an ethoxy group, a propoxy group, and a butoxy group. Among these, a methoxy group or an ethoxy group is preferred because the use of dyed resin particles makes it possible to more easily obtain an ink having good storage stability and high light fastness.

Specific examples of the halogen atom for each of R₇ and R₈ in General Formula (2) include, but are not particularly limited to, a chlorine atom, a bromine atom, and a fluorine atom. Among these, a chlorine atom is preferred because the use of dyed resin particles makes it possible to more easily obtain an ink having good storage stability and high light fastness.

Specific examples of the alkyl group for R₉ in General Formula (2) include, but are not particularly limited to, a methyl group, an ethyl group, a n-propyl group, an iso-propyl group, a n-butyl group, a sec-butyl group, a tert-butyl group, 2-ethylpropyl, and a 2-ethylhexyl group. Among these, a linear or branched alkyl group having 1 to 8 carbon atoms is preferred. In particular, a methyl group or an ethyl group is preferred because the use of dyed resin particles makes it possible to more easily obtain an ink having good storage stability and high light fastness.

Preferred examples of the compound having the structure represented by General Formula (2) include Compounds (2-1) to (2-21) illustrated below, but are not limited to the following compounds.

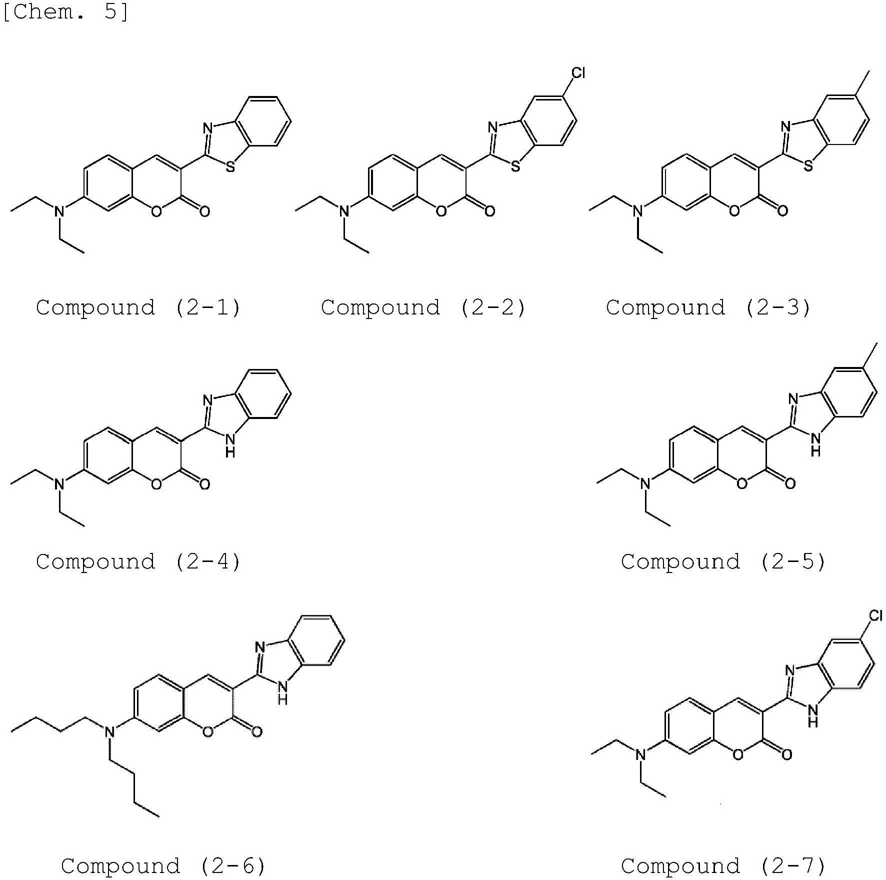

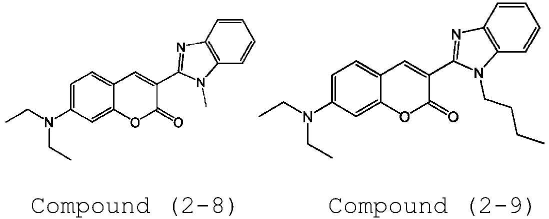

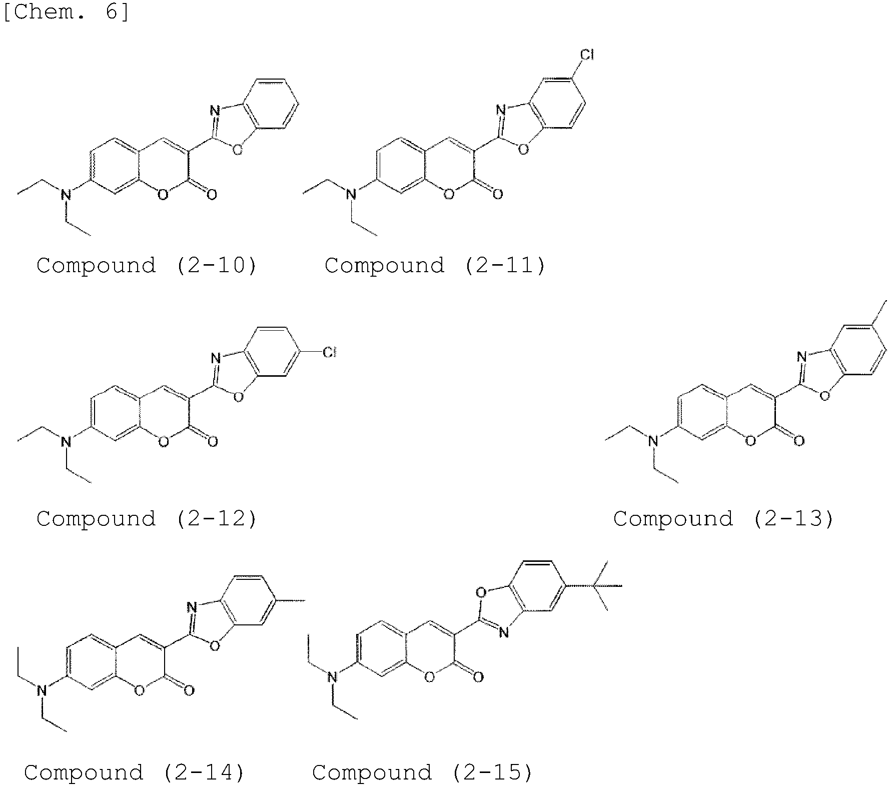

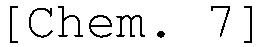

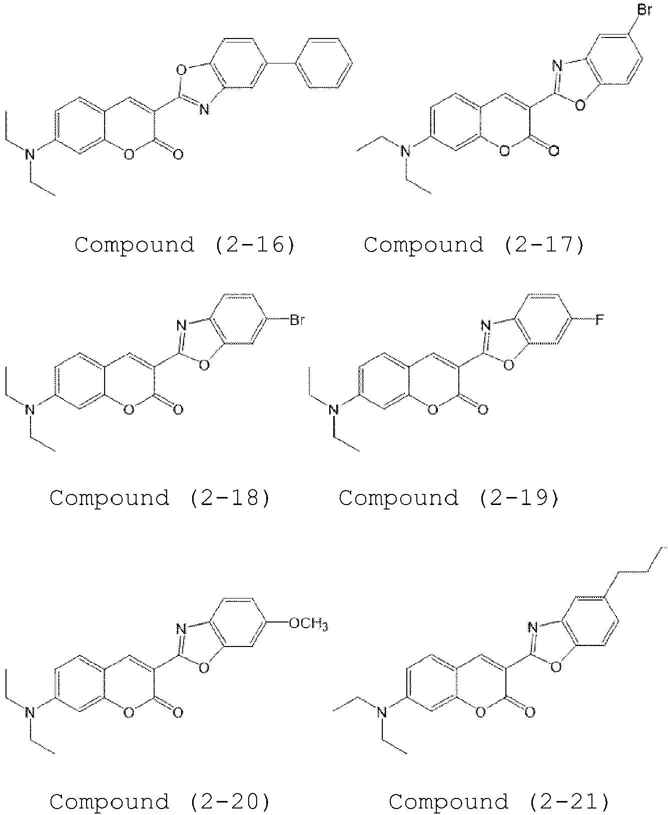

The compounds represented by General Formula (2) may be used alone, or two or more thereof may be used in combination in order to adjust color tone and the like depending on the intended use. Furthermore, the compounds may also be used in combination with known pigments or dyes as long as the effects of the present invention are not impaired. The known pigments or dyes to be combined may be used alone, or two or more thereof may be used in combination.

Among these, a compound represented by General Formula (2) in which R₅ and R₆ are each independently an alkyl group having 1 to 4 carbon atoms and X₁ is O, N-H, or N-CH₃ is preferred. In particular, Compound (2-1), Compound (2-4), or Compound (2-11) is preferred. The use of resin particles dyed with any one of these compounds makes it possible to more easily obtain an ink having good storage stability and high light fastness.

The compound represented by General Formula (2) can be synthesized by a known method, or a commercially available product thereof can be obtained.

In the ink, the total amount of the compound represented by General Formula (1) and the compound represented by General Formula (2) is not particularly limited. The total amount is preferably 0.5% or more by mass and 10.0% or less by mass, more preferably 1.0% or more by mass and 7.0% or less by mass, based on the total mass of the ink. The mixing ratio of the compound represented by General Formula (1) to the compound represented by General Formula (2) is also not particularly limited. Preferably, in terms of mass ratio, the amount of the compound represented by General Formula (2) is in the range of 5 parts by mass or more and 90 parts by mass or less relative to 10 parts by mass of the compound represented by General Formula (1). More preferably, the amount is in the range of 10 parts by mass or more and 70 parts by mass or less, still more preferably in a range of 30 parts by mass or more and 50 parts by mass or less. The use of carrier particles dyed with colorants within such ranges makes it possible to more easily obtain an ink having good storage stability and high light fastness.

### [Carrier Particles]

The term "carrier particles" as used in the specification refers to a carrier that is dispersed in a medium and can be present therein as particles having a particle diameter. The carrier particles are present in a dispersed state in the ink. When the medium is an aqueous medium, the carrier particles are present in a dispersed state in the aqueous medium, that is, in the state of a carrier emulsion. The carrier particles dyed with a colorant are present in a state in which the colorant is dispersed in the carrier particles or the carrier particles are in a colored state.

The cumulative 50% particle diameter (D50) in the volume-based particle size distribution of the carrier particles is preferably 140 nm or more and 300 nm or less. When the D50 is 140 nm or more, a decrease in light fastness of an image can be inhibited. When the D50 is more than or not more than 300 nm, a decrease in ejection stability of the ink can be inhibited.

When the carrier particles are dyed with the compounds represented by General Formulae (1) and (2), the mixing ratio of the compounds represented by General Formulae (1) and (2) to the carrier particles is not particularly limited. Preferably, on a mass basis, the total amount of the compounds represented by General Formulae (1) and (2) is 0.5 parts by mass or more and 20 parts by mass or less relative to 100 parts by mass of the carrier particles. More preferably, the total amount of the compounds represented by General Formulae (1) and (2) is 1 part by mass or more and 10 parts by mass or less.

The amount of the dyed carrier particles contained is preferably 1% by mass or more and 10% by mass or less, more preferably 3% by mass or more and 6% by mass or less, based on the total amount of the ink.

Examples of the carrier particles include resins and cellulose nanofibers. Examples of the resins include a styrene-based polymer, an acrylic acid-based polymer, a methacrylic acid-based polymer, a polyester resin, a polyvinyl ether resin, a polyvinyl methyl ether resin, a polyvinyl alcohol resin, a polyvinyl butyral resin, a polyurethane resin, and a polypeptide resin. These resins may be used alone, or two or more thereof may be used in combination as needed. When the carrier particles are made of a resin, they may also be referred to as "resin particles".

The cellulose nanofibers are selected according to the intended use, and are, for example, ultrafine fibers obtained by subjecting plant fibers to a chemical and/or mechanical fibrillation treatment, the ultrafine fibers having an average width of about several nanometers to about 20 nm and an average length of about 0.5 µm to about several micrometers. The size (fiber diameter) of these cellulose nanofibers varies depending on the type of cellulose nanofiber. In addition, a fiber diameter is selected so as to fall within a suitable range in view of thickening effect, storage stability, color developability, and the like, as long as the characteristics in various applications are not impaired.

As materials containing cellulose fibers, plants such as wood, bamboo, kenaf, hemp, jute, wood pulp, waste paper, crystalline cellulose, agricultural crop residues, and recycled pulp; animals such as sea squirts; algae; and microorganisms can be used.

Cellulose nanofibers are commercially available, and such commercially available products may also be used. Examples of the commercially available products include the products "Rheocrysta I-2AX", "CNF 03", and "CNF 04" (all manufactured by Dai-ichi Kagaku Kogyo Co., Ltd.); the product "ELLEX-S" (manufactured by Daio Paper Corporation); and the product "nanoforest-S" (manufactured by Chuetsu Pulp & Paper Co., Ltd.).

### [Colorant]

In the ink, as described above, at least one compound represented by General Formula (1) and at least one compound represented by General Formula (2) are used in combination as colorants. Known colorants and the like may also be used in combination as long as solubility or dispersibility in the medium is not impaired. Examples thereof include, but are not particularly limited to, condensed azo compounds, azo metal complexes, and methine compounds.

In the ink, the content of the colorants is appropriately set depending on the intended use, and is not particularly limited. The total amount, including any known colorants, is preferably 1.0 to 30.0 parts by mass, more preferably 2.0 to 20.0 parts by mass, and still more preferably 3.0 to 15.0 parts by mass, relative to 1000 parts by mass of the medium. Within the above range, sufficient coloring power can be obtained, and the colorants also have good dispersibility.

### [Method for Producing Dyed Carrier Particles]

When resin particles are used as the carrier particles, the resin particles can be produced, for example, according to a conventionally known method. Examples thereof include an emulsion polymerization method, a miniemulsion polymerization method, a seed polymerization method, and a phase inversion emulsification method. Examples of methods for dyeing the resin particles include a method in which resin particles are formed by polymerizing a monomer mixture solution in which compounds represented by General Formulae (1) and (2) are dissolved, and a method in which compounds represented by General Formulae (1) and (2) are added to the resin particles and heated.

When cellulose nanofibers are used as the carrier particles, examples of methods for dyeing the cellulose nanofibers include a method in which the cellulose nanofibers are brought into contact with compounds represented by General Formulae (1) and (2) in an aqueous medium. Thereafter, dyed cellulose nanofibers can be obtained by optionally performing heating or oxidation treatment and then removing the medium by evaporation.

### [Medium]

In the present embodiment, the "medium" is selected according to the intended use and purpose of the ink and means water or an organic solvent, but is not particularly limited thereto. When an organic solvent is used as the medium, the type of the organic solvent is selected according to the purpose and intended use of the ink and is not particularly limited.

Examples of the organic solvent include alcohols such as methanol, ethanol, isopropanol, butanol, 2-methyl-2-butanol, 3-pentanol, benzyl alcohol, and cyclohexanol; glycols such as methyl cellosolve, diethylene glycol, and diethylene glycol monobutyl ether; ketones such as acetone, methyl ethyl ketone, and methyl isobutyl ketone; esters such as ethyl acetate, butyl acetate, and cellosolve acetate; aliphatic hydrocarbons such as octane, petroleum ether, and cyclohexane; aromatic hydrocarbons such as toluene and xylene; ethers such as diethyl ether, dimethyl glycol, trioxane, and tetrahydrofuran; acetals such as diethyl acetal; organic acids such as formic acid, acetic acid, and propionic acid; and sulfur- or nitrogen-containing organic compounds such as monoethanolamine, pyridine, dimethyl sulfoxide, and dimethylformamide.

A polymerizable monomer may also be used as the organic solvent. Examples of the polymerizable monomer include an addition-polymerizable monomer and a condensationpolymerizable monomer, and an addition-polymerizable monomer is preferred. Specific examples of the polymerizable monomer include styrene-based monomers such as styrene, methylstyrene, and ethylstyrene; acrylate-based monomers such as methyl acrylate, ethyl acrylate, behenyl acrylate, 2-ethylhexyl acrylate, dimethylaminoethyl acrylate, diethylaminoethyl acrylate, acrylonitrile, and acrylamide; methacrylate-based monomers such as methyl methacrylate, ethyl methacrylate, diethylaminoethyl methacrylate, methacrylonitrile, and methacrylamide; olefin-based monomers such as ethylene, propylene, butylene, butadiene, isoprene, isobutylene, and cyclohexene; vinyl halide-based monomers such as vinyl chloride, vinylidene chloride, vinyl bromide, and vinyl iodide; vinyl ester-based monomers such as vinyl acetate, vinyl propionate, and vinyl benzoate; vinyl ether-based monomers such as vinyl methyl ether, vinyl ethyl ether, and vinyl isobutyl ether; and vinyl ketone-based monomers such as vinyl methyl ketone, vinyl hexyl ketone, and methyl isopropenyl ketone. These may be used alone, or two or more thereof may be used in combination as needed.

In the ink, the content of the medium is selected according to the purpose and intended use of the ink, and is not particularly limited.

In the ink, components other than the above-described dyed resin particles are appropriately selected according to the intended use of the ink, including the medium. In addition, the following additives may be appropriately added as long as characteristics in various applications are not impaired: polyhydric alcohols such as trimethylolpropane and trimethylolethane; urea derivatives such as urea and ethylene urea; water-soluble resins, undyed resin particles, surfactants, pH adjusters, corrosion inhibitors, preservatives, antifungal agents, antioxidants, reduction inhibitors, evaporation accelerators, chelating agents, and cellulose nanofibers.

Examples of ultraviolet absorbers include a benzophenone-based compound, a benzotriazole-based compound, a cyanoacrylate-based compound, and a triazine-based compound.

Examples of commercially available ultraviolet absorbers include Tinuvin P, Tinuvin 326, Tinuvin 571, and Tinuvin 360 (all manufactured by BASF), and Adekastab LA-24, LA-29, LA-31RG, LA-32, LA-36, LA-46, LA-F70, and 1413 (all manufactured by Adeka Corporation). Adekastab LA-29, LA-32, LA-36, and LA-46 are preferred, and Adekastab LA-29, LA-32, and LA-36 are particularly preferred.

Examples of antioxidants include phenol-based compounds.

Examples of commercially available antioxidants include Adekastab AO-20, AO-30, AO-40, AO-50, AO-50F, AO-60, AO-60G, AO-80, and AO-330 (all manufactured by Adeka Corporation).

### [Method for Preparing Ink]

The ink according to the present embodiment can be prepared as described below.

Carrier particles dyed with compounds represented by General Formulae (1) and (2) are prepared according to the above-described method. The prepared carrier particles dyed with compounds represented by General Formulae (1) and (2), and, if necessary, another colorant, an emulsifier, a resin, and the like are gradually added, while stirring, to a medium selected according to the intended use so as to be sufficiently mixed with the medium. Furthermore, the ink of the present invention can be obtained by applying mechanical shearing force using a disperser to stably dissolve or finely disperse the components.

### [Disperser]

Examples of dispersers that can be used for dispersing the respective components in the medium include, but are not particularly limited to, rotary shear homogenizers; media-type dispersers such as ball mills, sand mills, and attritors; and high-pressure counter-collision dispersers.

The ink according to the present embodiment is also suitable as an ink for oil-based writing instruments, an ink for water-based writing instruments, an ink for ink jet recording, an ink for textile printing, an ink for printing, and an ink for coating. Among these, the ink is preferably used as an ink for oil-based writing instruments, an ink for water-based writing instruments, or an ink for ink jet recording. Hereinafter, application examples of the ink according to the present embodiment will be described with reference to specific examples. With regard to items not specifically described, the description of the ink according to the present embodiment applies as it is.

### [Ink for Oil-Based Writing Instruments]

The ink for oil-based writing instruments contains resin particles dyed with compounds represented by General Formulae (1) and (2) described above, and a medium preferably containing an alcohol or a glycol ether. In addition to these, the ink preferably further contains a resin present in a dissolved state in the medium. The content of the carrier particles dyed with compounds represented by General Formulae (1) and (2) is appropriately selected depending on the intended use and is not particularly limited.

### [Medium Containing Alcohol or Glycol Ether]

Examples of the alcohol include unsubstituted alkyl monohydric alcohols such as ethanol, isopropanol, n-butanol, isobutanol, tert-butanol, sec-butanol, 2-methyl-2-butanol, 3-pentanol, octanol, and cyclohexanol; substituted alkyl monohydric alcohols such as 2-phenoxyethanol and 3-methyl-3-methoxy-1-butanol; alkyl polyhydric alcohols such as ethylene glycol, diethylene glycol, triethylene glycol, 3-methyl-1,3-butanediol, and 1,3-butanediol; and aromatic alcohols such as benzyl alcohol. Examples of the substituent in the substituted alkyl monohydric alcohol include an alkoxy group and an aryloxy group.

Glycol ethers also include monohydric alcohol monoethers, but these are described as alcohols. Hereinafter, diether compounds are exemplified. Examples thereof include ethylene glycol dimethyl ether, diethylene glycol dimethyl ether, dipropylene glycol, ethylene glycol diethyl ether, diethylene glycol diethyl ether, and diethylene glycol dipropyl ether.

The medium may further contain, in addition to the alcohol or glycol ether, water and an ester-based solvent such as 3-methyl-3-methoxybutyl acetate, butyl acetate, or methyl propionate.

The amount of the medium used is appropriately selected depending on the type of writing instrument, such as a ballpoint pen, a felt-tip pen, or a marker pen, and is not particularly limited.

### [Resin Present in Dissolved State in Medium]

For adjusting the viscosity of the ink and improving abrasion resistance, the ink preferably contains a resin present in a dissolved state in the medium.

The resin is selected according to the purpose and intended use of the ink and is not particularly limited. Examples thereof include, but are not particularly limited to, a butyral resin, a ketone resin, a polyvinylpyrrolidone resin, a styrene resin, a styrene-acrylic resin, a styrene-maleic resin, a terpene resin, an acrylic resin, a polyvinyl acetal resin, a polyvinyl butyral resin, a terpene phenolic resin, a rosin-modified maleic resin, a rosin phenolic resin, a maleic resin, a phenolic resin, a xylene resin, a urea resin, a polyamide resin, a phenoxy resin, and a cellulosic resin. In order to provide a smooth writing feel free from skipping, a butyral resin and a ketone resin are preferably used.

Commercially available products may be used as the butyral resin and the ketone resin. Examples of commercially available ketone resins include low-degree-of-polymerization type products available under the trade names "S-LEC BL-1", "BL-2", and "BL-10", and high-degree-of-polymerization type products available under the trade names "BH-3", "BH-6", "BX-1", "BX-5", and "BH-S" (all manufactured by Sekisui Chemical Co., Ltd.).

Examples of commercially available ketone resins include "Ketone Resin K-90" (trade name, manufactured by Arakawa Chemical Industries, Ltd.); and "Hilac 901", "Hilac 110H", and "Hilac 111" (trade names, all manufactured by Hitachi Chemical Co., Ltd.). The incorporation of these resins into the ink facilitates viscosity adjustment, can inhibit wear of the pen tip, and makes it possible to obtain a stable and good writing feel. Furthermore, since film-forming properties can be appropriately reduced, even when the pen tip remains exposed for a prolonged period, solidification of the ink can be inhibited, and the occurrence of "skipping phenomenon" at the start of writing can be inhibited.

The content of these resins is appropriately selected and is not particularly limited.

### [Additive]

If necessary, additives may further be added as long as the ink is not adversely affected. Examples thereof include a corrosion inhibitor, a surfactant, a lubricant, a humectant, an ultraviolet absorber, a defoaming agent, an antioxidant, a pH adjuster, a leveling agent, a preservative, and cellulose nanofibers.

### [Ink for Water-Based Writing Instruments]

The ink for water-based writing instruments preferably contains a resin or cellulose nanofiber dyed with compounds represented by General Formulae (1) and (2) described above, an aqueous medium, a dispersant (hereinafter also referred to as a "first dispersant"), and a water-soluble resin. The content of the carrier particles dyed with compounds represented by General Formulae (1) and (2) is appropriately selected depending on the intended use and is not particularly limited.

### [Aqueous Medium]

The aqueous medium contains at least water, and may further contain a water-soluble organic solvent.

The content of water in the ink is preferably 50% by mass or more and 95% by mass or less based on the total mass of the ink. As the water-soluble organic solvent, those commonly used in inks may be used. Examples thereof include alcohols, (poly)alkylene glycols, glycol ethers, nitrogen-containing compounds, and sulfur-containing compounds. The content of the water-soluble organic solvent in the ink is appropriately selected and is not particularly limited.

### [First Dispersant]

When water is used as the medium, a first dispersant may be added as needed in order to obtain good dispersion stability of the colorants. Examples of the first dispersant include, but are not particularly limited to, cationic surfactants, anionic surfactants, and nonionic surfactants.

Examples of cationic surfactants include dodecylammonium chloride, dodecylammonium bromide, dodecyltrimethylammonium bromide, dodecylpyridinium chloride, dodecylpyridinium bromide, and hexadecyltrimethylammonium bromide.

Examples of anionic surfactants include fatty acid soaps such as sodium stearate and sodium dodecanoate; sodium dodecyl sulfate; sodium dodecylbenzene sulfate; and sodium lauryl sulfate.

Examples of nonionic surfactants include dodecyl polyoxyethylene ether, hexadecyl polyoxyethylene ether, nonylphenyl polyoxyethylene ether, lauryl polyoxyethylene ether, sorbitan monooleate polyoxyethylene ether, and monodecanoyl sucrose. The content of the first dispersant in the ink is appropriately selected and is not particularly limited.

### [Water-Soluble Resin]

A water-soluble resin may be added to the ink for water-based writing instruments as needed.

### [Additive]

The ink for water-based writing instruments can be suitably used for a water-based ballpoint pen, a gel-ink water-based ballpoint pen, a felt-tip pen, a marker pen, and the like. Additives such as a dispersant, a lubricant, a pH adjuster, a corrosion inhibitor, a preservative, and an antibacterial agent may be appropriately added to the ink for water-based writing instruments as long as characteristics in various applications are not impaired.

### [Ink for Ink Jet Recording]

The ink for ink jet recording preferably contains a resin or cellulose nanofiber dyed with compounds represented by General Formulae (1) and (2) described above, an aqueous medium, and a dispersant (hereinafter also referred to as a "second dispersant"). The content of the carrier particles dyed with compounds represented by General Formulae (1) and (2) is appropriately selected depending on the intended use and is not particularly limited.

As the aqueous medium, the description of the aqueous medium used in the ink for water-based writing instruments applies as it is.

### [Second Dispersant]

Examples of the second dispersant include ionic surfactants, nonionic surfactants, and polymeric surfactants.

Examples of ionic surfactants include anionic surfactants such as aliphatic monocarboxylate salts, polyoxyethylene alkyl ether carboxylate salts, N-acylsarcosine salts, N-acylglutamic acid salts, dialkyl sulfosuccinate salts, alkane sulfonate salts, alpha-olefin sulfonate salts, linear or branched alkylbenzene sulfonate salts, naphthalene sulfonate-formaldehyde condensates, alkylnaphthalene sulfonate salts, N-methyl-N-acyltaurine salts, alkyl sulfate salts, polyoxyethylene alkyl ether sulfate salts, fatty oil sulfate ester salts, alkyl phosphate salts, polyoxyethylene alkyl ether phosphate salts, and polyoxyethylene alkylphenyl ether phosphate salts; cationic surfactants such as alkylamine salts, alkyltrimethylammonium chlorides, bromides, or iodides, dialkyldimethylammonium chlorides, bromides, or iodides, alkylbenzalkonium chlorides, and alkylpyridinium chlorides; and amphoteric surfactants such as alkyl betaine, fatty acid amidopropyl betaine, 2-alkyl-N-carboxymethyl-N-hydroxyethylimidazolinium betaine, alkyl- or dialkyldiethylenetriaminoacetic acid, and alkylamine oxide.

Examples of nonionic surfactants include glycerol fatty acid esters, sorbitan fatty acid esters, and sucrose fatty acid esters; polyoxyethylene alkyl ethers, polyoxyethylene alkylphenyl ethers, and polyoxyethylene polyoxypropylene glycol; and polyethylene glycol fatty acid esters, polyoxyethylene sorbitan fatty acid esters, and fatty acid alkanolamide.

Examples of polymeric surfactants include anionic polymers such as polyacrylate salts, styrene-acrylic acid copolymer salts, vinylnaphthalene-acrylic acid copolymer salts, styrene-maleic acid copolymer salts, vinylnaphthalene-maleic acid copolymer salts, and polyphosphoric acid; and nonionic polymers such as polyvinyl alcohol, polyvinylpyrrolidone, and polyalkylene glycol.

Examples of commercially available products include X-200, X-1, X-205, and X-220 (all manufactured by Seiko PMC Corporation), Nopcosperse 6100 (manufactured by San Nopco Limited), BYK-190, BYK-187, BYK-191, BYK-194N, BYK-199, and BYKJET-9171 (all manufactured by BYK), Aron A-6114 (manufactured by Toagosei Co., Ltd.), BYK-184, BYK-182, BYK-183, and BYK-185 (all manufactured by BYK), and TEGO Disperse 710 (manufactured by Evonik Tego Chemie).

BYK-190, BYK-187, BYK-191, BYK-194N, BYK-199, and BYKJET-9171 are preferred, and BYK-190 and BYKJET-9171 are particularly preferred.

The content of the second dispersant in the ink for ink jet recording is appropriately selected and is not particularly limited. The content (% by mass) of the dispersant in the ink is preferably 0.1% by mass or more and 20% by mass or less, more preferably 0.5% by mass or more and 15% by mass or less, based on the total mass of the ink.

When the ink is used as an ink for ink jet recording, various additives such as a pH adjuster, a corrosion inhibitor, a preservative, an antifungal agent, an antioxidant, a reduction inhibitor, an evaporation accelerator, a chelating agent, and a water-soluble polymer may be contained therein as needed, in addition to the above-described components.

### [Ink for Textile Printing]

When the ink according to the present embodiment is used as an ink for textile printing, the fabric that can be subjected to textile printing is not particularly limited as long as it can be dyed. Examples thereof include a fabric made of fibers containing polyester, acetate, or triacetate. The fabric may be in any form such as a woven fabric, a knitted fabric, or a nonwoven fabric. It is also possible to use a fabric made of cotton, silk, hemp, polyurethane, acrylic, nylon, wool, or rayon fibers, or a fabric made of a combination of two or more of these fibers.

The thickness of the yarn constituting the fabric is preferably in the range of 10 to 100 denier. The thickness of the fibers constituting the yarn is not particularly limited, but is preferably 1 denier or less.

### [Second Embodiment]

The present inventors have conducted intensive studies in order to solve the above-described problems and have found that the following ink can provide high optical density and excellent color development stability during heat pressing.

The ink according to the present embodiment contains an aqueous medium, a dispersant, a compound represented by General Formula (1), and a compound represented by General Formula (2).

When the compounds represented by General Formulae (1) and (2) are used, an ink having high optical density and excellent color development stability during heat pressing can be obtained. Although the mechanism contributing to the color development stability has not been clearly understood, the present inventors presume as follows.

This is presumably because the compounds represented by General Formulae (1) and (2) are of approximately the same size in terms of structure, and overlap occurs due to π-π stacking interactions between the benzene rings imparted by their respective dialkylamino groups, thereby stabilizing the compounds. In particular, in General Formula (2), when X₁ is N-H, the effect is greatest because the hydrogen atom of N-H and the oxygen atom of C=O of the coumarin skeleton form a stable six-membered ring structure by hydrogen bonding.

The ink according to the present embodiment can be used for recently expanding textile applications, such as dyeing of polyester fibers, sports apparel formed from fabrics interwoven with polyester and polyurethane, and high-grade one-piece dresses using shape-processed fibers.

Each component of the ink according to the present embodiment will be described in detail. Since the compounds represented by General Formulae (1) and (2) and the disperser for dispersing the respective components in the medium may be the same as those described in the first embodiment, description thereof is omitted.

### (Dispersant)

Examples of the dispersant include, but are not particularly limited to, an anionic dispersant, a nonionic dispersant, and a polymeric dispersant.

Examples of the anionic dispersant include, but are not particularly limited to, a formalin condensate of aromatic sulfonic acid, a formalin condensate of β-naphthalenesulfonic acid, a formalin condensate of alkylnaphthalenesulfonic acid, and a formalin condensate of creosote oil sulfonic acid.

Examples of the aromatic sulfonic acid include, but are not particularly limited to, creosote oil sulfonic acid, cresol sulfonic acid, phenol sulfonic acid, β-naphthol sulfonic acid, alkylnaphthalene sulfonic acids such as methylnaphthalene sulfonic acid and butylnaphthalene sulfonic acid, a mixture of β-naphthalene sulfonic acid and β-naphthol sulfonic acid, a mixture of cresol sulfonic acid and 2-naphthol-6-sulfonic acid, and lignin sulfonic acid.

Examples of the nonionic dispersant include, but are not particularly limited to, alkylene oxide adducts of phytosterols, alkylene oxide adducts of cholestanols, polyoxyethylene alkyl ethers, polyoxyethylene alkylphenyl ethers, polyoxyethylene fatty acid ester sorbitan fatty acid esters, polyoxyethylene sorbitan fatty acid esters, polyoxyethylene alkylamines, glycerin fatty acid esters, EO-PO block polymers mainly composed of copolymers of ethylene oxide (EO) and propylene oxide (PO), and substituted derivatives thereof.

Examples of the polymeric dispersant include, but are not particularly limited to, partial alkyl esters of polyacrylic acid, polyalkylene polyamines, polyacrylate salts, styrene-acrylic acid copolymers, and vinylnaphthalene-maleic acid copolymers.

Among the above dispersants, an EO-PO block polymer mainly composed of a copolymer of ethylene oxide (EO) and propylene oxide (PO) is particularly preferred because an ink having high optical density and excellent color development stability during heat pressing can be more easily obtained. Commercially available products may be used as the EO-PO block polymer. Examples of the commercially available products include "DisperBYK 183", "DisperBYK 185", and "DisperBYK 190" (trade names, all manufactured by BYK).

The content (% by mass) of the dispersant in the ink is preferably 0.1% by mass or more and 20% by mass or less, more preferably 0.5% by mass or more and 15% by mass or less, based on the total mass of the ink.

### (Aqueous Medium)

The ink is preferably an aqueous ink containing at least water as an aqueous medium. The ink may further contain a water-soluble organic solvent as the aqueous medium.

The content (% by mass) of water in the ink is preferably 50% by mass or more and 95% by mass or less, particularly preferably 55% by mass or more and 90% by mass or less, based on the total mass of the ink. As the water-soluble organic solvent, those commonly used in inks may be used. Examples thereof include alcohols, (poly)alkylene glycols, glycol ethers, nitrogen-containing compounds, and sulfur-containing compounds. The content (% by mass) of the water-soluble organic solvent in the ink is preferably 3% by mass or more and 50% by mass or less, particularly preferably 5% by mass or more and 40% by mass or less, based on the total mass of the ink.

### (Other Additives)

The ink may contain the following additives as needed, in addition to the above-described components. Examples thereof include polyhydric alcohols such as trimethylolpropane and trimethylolethane, urea derivatives such as urea and ethylene urea, water-soluble resins, undyed resin particles, surfactants, a pH adjuster, a corrosion inhibitor, a preservative, an antifungal agent, an antioxidant, a reduction inhibitor, an evaporation accelerator, and a chelating agent.

### (Physical Properties of Ink)

It is preferable to use an ink having appropriately controlled surface tension and viscosity in accordance with the characteristics of the ink jet recording head to be used. Specifically, the surface tension of the ink at 25°C is preferably 10 mN/m or more and 60 mN/m or less, more preferably 20 mN/m or more and 60 mN/m or less, and particularly preferably 30 mN/m or more and 50 mN/m or less.

The viscosity of the ink at 25°C is preferably 1.0 mPa·s or more and 10 mPa·s or less, more preferably 1.0 mPa·s or more and 5 mPa·s or less.

### (Recording Method)

The ink according to the present embodiment can be used in a printer of a sublimation transfer system or a direct printing system.

Hereinafter, a sublimation transfer system will be described as an example of a recording method using the ink according to the present embodiment, but the present invention is not limited to this method.

The recording method of the sublimation transfer system includes two steps: (1) a printing step onto transfer paper; and (2) a transfer step onto a fabric.

### (Printing Step onto Transfer Paper)

In the printing step onto transfer paper, the ink according to the present embodiment is deposited onto transfer paper by an ink jet system. The transfer paper is not particularly limited, but sublimation transfer paper is preferably used.

As the head that can be used in the ink jet system, a piezoelectric system or a system in which ink is ejected by bubbles generated by heating the ink can be used.

### (Transfer Step onto Fabric)

The transfer paper to which the ink has been deposited in the above printing step is superposed on the fabric, and heat and pressure treatment is performed using a heating and pressing apparatus such as a heat press machine. As a result, an image is transferred to the fabric, and the image can be recorded on the fabric. At this time, the duration of the heat and pressure treatment is preferably 30 seconds or more and 180 seconds or less. The lower limit of the heating temperature in this step is not particularly limited, but is preferably 180°C or higher and 220°C or lower, more preferably 185°C or higher and 205°C or lower, and particularly preferably 190°C or higher and 200°C or lower.

The heat press pressure in this step is not particularly limited, but is preferably 30 PSI or more and 120 PSI or less, particularly preferably 40 PSI or more and 90 PSI or less.

Instead of heat pressing, a sublimation transfer machine that performs transfer at a low temperature under vacuum (for example, trade name: "PSH-4230", manufactured by Europort Co., Ltd.) can also be used.

When the recording method using the ink according to the present embodiment is a direct printing system, unlike the sublimation transfer system, an image is recorded on a fabric by directly depositing the ink onto the fabric using an ink jet system without a printing step onto transfer paper. Thereafter, the image is fixed on the fabric by subjecting the fabric to which the ink has been deposited to heat and pressure treatment using a heating and pressing apparatus such as a heat press machine. The duration of the heat and pressure treatment is preferably 30 seconds or more and 180 seconds or less. The heating temperature in this step is not particularly limited, but is preferably 180°C or higher and 220°C or lower, more preferably 185°C or higher and 205°C or lower, and particularly preferably 190°C or higher and 200°C or lower.

### (Recording Medium)

The recording medium is not particularly limited as long as it can be dyed with the ink according to the present embodiment. Examples thereof include a fabric made of fibers containing polyester, acetate, or triacetate. The fabric may be in any form such as a woven fabric, a knitted fabric, or a nonwoven fabric. It is also possible to use a fabric made of cotton, silk, hemp, polyurethane, acrylic, nylon, wool, or rayon fibers, or a fabric made of a combination of two or more of these fibers.

In particular, in mixed materials of polyester and polyurethane that have recently been frequently used in sportswear and the like, conventional sublimation dyes have tended to cause variation in color development depending on the heat press temperature. However, the ink according to the present embodiment makes it possible to obtain a dyed article having excellent color development stability during heat pressing.

The thickness of the yarn constituting the fabric is preferably in the range of 10 denier or more and 100 denier or less. The thickness of the fibers constituting the yarn is not particularly limited, but is preferably 1 denier or less.

An article having a three-dimensional shape such as a sheet shape, a spherical shape, or a rectangular solid shape may also be used. An example thereof is a polyester-coated mug.

### [Third Embodiment]

The thermal transfer recording sheet according to the present embodiment is a thermal transfer recording sheet including a substrate and a yellow coloring material layer disposed on the substrate, in which the yellow coloring material layer contains a compound represented by General Formula (1) and a compound represented by General Formula (2).

Hitherto, when a compound represented by General Formula (1) is used alone as a yellow coloring material in an ink, the ink tends to aggregate, resulting in poor storage stability. When a compound represented by General Formula (2) is used alone as a yellow coloring material in an ink, aggregation does not occur, but the light fastness is low.

The present inventors have conducted intensive studies and have found that same-color mixing-induced fading can be inhibited when a compound represented by General Formula (1) and a compound represented by General Formula (2), each of which has a problem when used alone, are used in combination as yellow coloring materials.

Although the mechanism by which the effect of inhibiting mixed-color fading due to a mixture of compounds having different structures but the same color as yellow coloring materials is exhibited has not been clearly understood, the present inventors presume as follows.

When compounds having structures represented by General Formulae (1) and (2) are used as in the present embodiment, the ink has good storage stability, and a thermal transfer recording sheet is obtained in which same-color mixing-induced fading is inhibited in samples of image-recorded products (printed matter). This is considered to be because the compounds represented by General Formulae (1) and (2) are of approximately the same size in terms of structure, and the compounds overlap due to π-π stacking interactions between the benzene rings imparted by the dialkylamino groups of the respective compounds. It is considered that the above-described effects are exhibited as a result of stabilization due to this overlap. In particular, in the compound represented by General Formula (2), when X₁ is N-H, the above-described effects are most enhanced because the hydrogen atom of N-H and the oxygen atom of C=O of the coumarin skeleton form the most stable structure when a six-membered ring is formed by hydrogen bonding.

The configuration of the thermal transfer recording sheet will be described in detail below. Since the compounds represented by General Formulae (1) and (2) used in the thermal transfer recording sheet may be the same as those described in the first embodiment, description thereof is omitted.

The thermal transfer recording sheet according to the present embodiment is a thermal transfer recording sheet including a substrate and a yellow coloring material layer disposed on the substrate, in which the yellow coloring material layer contains the above-described compound represented by General Formula (1) and the compound represented by General Formula (2).

The thermal transfer recording sheet preferably further includes a magenta coloring material layer and a cyan coloring material layer, and the yellow coloring material layer, the magenta coloring material layer, and the cyan coloring material layer are preferably sequentially arranged on one surface of the substrate.

### (I-1) Substrate

The substrate of the thermal transfer recording sheet preferably supports at least the above three coloring material layers. The substrate is not particularly limited, and a conventionally known substrate having appropriate heat resistance and strength in the field of thermal transfer recording sheets can be used.

### · Material of Substrate

Examples of the substrate include a polyethylene terephthalate film, a polyethylene naphthalate film, a polycarbonate film, a polyimide film, a polyamide film, an aramid film, a polystyrene film, a 1,4-polycyclohexylene dimethylene terephthalate film, a polysulfone film, a polypropylene film, a polyphenylene sulfide film, a polyvinyl alcohol film, a cellophane film, a cellulose derivative film, a polyethylene film, a polyvinyl chloride film, a nylon film, condenser paper, and paraffin paper. Among these, a polyethylene terephthalate film is preferred as the substrate from the viewpoints of mechanical strength, solvent resistance, and economy.

### · Thickness of Substrate

The thickness of the substrate can be 0.5 µm or more and 50 µm or less, and is preferably 3 µm or more and 10 µm or less from the viewpoint of transferability.

### · Adhesion Treatment

When a composition (ink) containing a dye is applied onto the substrate in order to form each coloring material layer on the substrate, the coating liquid (dye composition) may have insufficient wettability, adhesion, and the like. Therefore, the substrate is preferably subjected to adhesion treatment on the coating surface thereof as needed.

The adhesion treatment is not particularly limited, and a conventionally known method in the field of thermal transfer recording sheets can be used. Examples of the adhesion treatment include ozone treatment, corona discharge treatment, ultraviolet treatment, plasma treatment, low-temperature plasma treatment, primer treatment, and chemical treatment. Two or more of these treatments may also be performed in combination.

A method for forming an adhesive layer on the substrate by coating may also be used for the adhesion treatment of the substrate. The adhesive layer is not particularly limited, and a conventionally known adhesive layer in the field of thermal transfer recording sheets can be used. Examples of materials used for the adhesive layer include organic materials such as polyester resins, polystyrene resins, polyacrylate resins, polyamide resins, polyether resins, polyvinyl acetate resins, polyethylene resins, polypropylene resins, polyvinyl chloride resins, polyvinyl alcohol resins, and polyvinyl butyral resins; and inorganic fine particles made of silica, alumina, magnesium carbonate, magnesium oxide, or titanium oxide.

### (I-2) Heat-Resistant Slipping Layer

The thermal transfer recording sheet preferably includes a heat-resistant slipping layer on the surface of the substrate opposite to the surface on which the coloring material layer is disposed, for the purpose of improving heat resistance and running properties of a thermal head.

The heat-resistant slipping layer is formed of a layer containing a heat-resistant resin. Examples of heat-resistant resins that can be used include, but are not limited to, polyvinyl butyral resins, polyvinyl acetal resins, polyester resins, polyether resins, polybutadiene resins, vinyl chloride-vinyl acetate copolymer resins, styrene-butadiene copolymer resins, polyurethane acrylates, polyester acrylates, polyimide resins, and polycarbonate resins.

The heat-resistant slipping layer may also contain additives such as a crosslinking agent, a release agent, a lubricant, and a slip agent. Examples of the lubricant include an amino-modified silicone compound and a carboxy-modified silicone compound. Examples of the slip agent include heat-resistant fine particles made of, for example, silica.

The heat-resistant slipping layer can be formed by adding the above-described heat-resistant resin, additives, and the like to a solvent and dissolving or dispersing them to prepare a heat-resistant slipping layer coating liquid, and then applying and drying the heat-resistant slipping layer coating liquid on the substrate. The method for applying the heat-resistant slipping layer coating liquid is not particularly limited, and examples thereof include methods using a bar coater, a gravure coater, a reverse roll coater, a rod coater, and an air doctor coater. Among these, a coating method using a gravure coater, which facilitates adjustment of the film thickness, is preferred.

From the viewpoint of transferability, the heat-resistant slipping layer coating liquid is preferably applied to the substrate in such an amount that the thickness of the heat-resistant slipping layer after drying is in the range of 0.1 µm or more and 5 µm or less.

### (I-3) Protective Layer

The thermal transfer recording sheet may include, on the substrate, one or two transferable protective layers for protecting an image surface after image formation, sequentially arranged on the surface together with coloring material layers described below. The protective layer or layers may also be disposed on a sheet (substrate) different from the coloring material layers. In this case, the thermal transfer recording sheet according to the present embodiment includes a sheet having a substrate and coloring material layers (coloring material layer sheet), and a sheet having a substrate and a protective layer (protective layer sheet).

The protective layer can be formed by applying a composition for each layer to the substrate and drying the composition. The method for applying the composition for each layer onto the substrate is not particularly limited, and examples thereof include methods using a bar coater, a gravure coater, a reverse roll coater, a rod coater, an air doctor coater, or the like. Among these, a coating method using a gravure coater, which facilitates adjustment of the film thickness, is preferred.

The drying conditions after applying the composition for each layer are not particularly limited as long as sufficient drying can be performed. For example, drying can be performed at a temperature in the range of 50°C or higher and 120°C or lower for 1 second or more and 5 minutes or less.

The binder resin used in the protective layer is not particularly limited, and preferred examples thereof include synthetic resins such as acrylic resins, e.g., polystyrene, polymethyl methacrylate, and polyethyl acrylate; styrene-based resins, e.g., poly-α-methylstyrene; vinyl-based resins, e.g., polyvinyl chloride, polyvinyl acetate, vinyl chloride-vinyl acetate copolymers, polyvinyl butyral, and polyvinyl acetal; polyamide resins; epoxy resins; polyurethane resins; petroleum resins; ionomers; ethylene-acrylic acid copolymers; and ethylene-acrylic ester copolymers.

The thickness of the protective layer is preferably in the range of 0.1 µm or more and 5 µm or less.

The thermal transfer recording sheet more preferably includes, under the yellow coloring material layer containing the above-described compounds, a release layer containing an acrylic resin such as polymethyl methacrylate or polyethyl acrylate and having a thickness of 0.1 µm to 1.5 µm, in order to facilitate release from the sheet.

The release layer is disposed on the substrate described above.

### (I-4) Coloring Material Layer

In the thermal transfer recording sheet, the yellow coloring material layer contains the above-described compounds represented by General Formulae (1) and (2) as yellow coloring materials.

The above-described two types of compounds may also be used in combination with other yellow coloring materials as long as the effects of the present invention are not impaired. The other yellow coloring materials are not particularly limited and can be used as long as they are used in the field of thermal transfer recording sheets and are thermally transferable.

The melting points of the compounds represented by General Formulae (1) and (2) are preferably 40°C or higher and 200°C or lower from the viewpoints of transferability and storage stability. The melting points are more preferably 50°C or higher and 180°C or lower, particularly preferably 60°C or higher and 150°C or lower.

The mixing ratio of the compound represented by General Formula (1) to the compound represented by General Formula (2) is not particularly limited. Preferably, in terms of mass ratio, the amount of the compound represented by General Formula (2) is in the range of 5 parts by mass or more and 90 parts by mass or less relative to 10 parts by mass of the compound represented by General Formula (1). More preferably, the amount is in the range of 10 parts by mass or more and 70 parts by mass or less, still more preferably in the range of 30 parts by mass or more and 50 parts by mass or less. When the amount is within such ranges, a thermal transfer recording sheet can be more easily obtained in which same-color mixing-induced fading of two different yellow coloring materials used in the yellow coloring material layer is inhibited.

### (I-4-1) Components Contained in Coloring Material Layer

Each component contained in the coloring material layer other than the above-described two types of compounds will be described below.

### (i) Other Coloring Material Compounds

The magenta coloring material used in the magenta coloring material layer and the cyan coloring material used in the cyan coloring material layer are not particularly limited as long as they are used in the field of thermal transfer recording sheets and are thermally transferable. The coloring material compound for each color may be used alone, or two or more thereof may be used in combination.

### (ii) Binder Resin

The binder resin that can be used in each coloring material layer of the thermal transfer recording sheet is not particularly limited, and various resins can be used. Among these, the following water-soluble resins and organic solvent-soluble resins are preferably used.

Water-soluble resins: cellulose resins, polyacrylic acid resins, starch resins, epoxy resins, and the like.

Organic solvent-soluble resins: polyacrylate resins, polymethacrylate resins, polystyrene resins, polycarbonate resins, polyethersulfone resins, polyvinyl butyral resins, ethyl cellulose resins, acetyl cellulose resins, polyester resins, AS resins, phenoxy resins, and the like.

These binder resins may be used alone, or two or more thereof may be used in combination as needed.

### (iii) Surfactant

A surfactant may be added to each coloring material layer of the thermal transfer recording sheet in order to impart sufficient slipping properties during heating by a thermal head (during image recording). Examples of the surfactant that can be added to each coloring material layer include cationic surfactants, anionic surfactants, and nonionic surfactants.

Examples of cationic surfactants include dodecylammonium chloride, dodecylammonium bromide, dodecyltrimethylammonium bromide, dodecylpyridinium chloride, dodecylpyridinium bromide, and hexadecyltrimethylammonium bromide.

Examples of anionic surfactants include fatty acid soaps such as sodium stearate and sodium dodecanoate; sodium dodecyl sulfate; sodium dodecylbenzene sulfate; and sodium lauryl sulfate.

Examples of nonionic surfactants include dodecyl polyoxyethylene ether, hexadecyl polyoxyethylene ether, nonylphenyl polyoxyethylene ether, lauryl polyoxyethylene ether, sorbitan monooleate polyoxyethylene ether, and monodecanoyl sucrose.

### (iv) Wax

A wax may be added to each coloring material layer of the thermal transfer recording sheet in order to impart sufficient slipping properties when the thermal head is not heated. Examples of the wax that can be added to each coloring material layer include, but are not limited to, polyethylene wax, paraffin wax, and fatty acid ester wax.

### (v) Other Additives

In addition to the above-described additives, an ultraviolet absorber, a preservative, an antioxidant, an antistatic agent, a viscosity modifier, and the like may be added to each coloring material layer of the thermal transfer recording sheet as needed.

Examples of ultraviolet absorbers include benzophenone-based compounds, benzotriazole-based compounds, cyanoacrylate-based compounds, and triazine-based compounds.

Examples of commercially available ultraviolet absorbers include Tinuvin P, Tinuvin 326, Tinuvin 571, and Tinuvin 360 (all manufactured by BASF), and Adekastab LA-24, LA-29, LA-31RG, LA-32, LA-36, LA-46, LA-F70, and 1413 (all manufactured by Adeka Corporation).

Adekastab LA-29, LA-32, LA-36, and LA-46 are preferred, and Adekastab LA-29, LA-32, and LA-36 are particularly preferred.

Examples of antioxidants include a phenol-based compound.

Examples of commercially available antioxidants include Adekastab AO-20, AO-30, AO-40, AO-50, AO-50F, AO-60, AO-60G, AO-80, and AO-330 (all manufactured by Adeka Corporation).

### (vi) Medium

The medium that can be used for preparing each coloring material composition for the thermal transfer recording sheet is not particularly limited, and examples thereof include water and organic solvents. Examples of organic solvents that can be used include alcohols, such as methanol, ethanol, isopropanol, and isobutanol; cellosolves, such as methyl cellosolve and ethyl cellosolve; aromatic hydrocarbons, such as toluene, xylene, and chlorobenzene; esters, such as ethyl acetate and butyl acetate; ketones, such as acetone, methyl ethyl ketone, methyl isobutyl ketone, and cyclohexanone; halogenated hydrocarbons, such as methylene chloride, chloroform, and trichloroethylene; ethers, such as tetrahydrofuran and dioxane; and N,N-dimethylformamide and N-methylpyrrolidone. These organic solvents may be used alone, or two or more thereof may be used in combination, if necessary. Water and an organic solvent can also be used in combination.

### (I-4-2) Composition of Coloring Material Composition for Forming Coloring Material Layer

### · Content of Coloring Material (Amount Used)

From the viewpoint of storage stability of the sheet, the total amount of the coloring material used in each coloring material composition (yellow coloring material, magenta coloring material, or cyan coloring material) is preferably 1 part by mass or more and 200 parts by mass or less relative to 100 parts by mass of the binder resin. From the viewpoint of dispersion of the coloring material, the amount is more preferably 50 parts by mass or more and 180 parts by mass or less relative to 100 parts by mass of the binder resin. When two or more coloring materials are used in combination, the amount of the coloring material used refers to the total number of parts by mass of the respective coloring materials. For example, even when the compounds represented by General Formulae (1) and (2) and an existing coloring material are used in combination as yellow coloring materials, the amount of the coloring material used refers to the total number of parts by mass of these coloring materials.

### · Content of Other Components (Amount Used)

The amount of other components (additives) used can be appropriately set and is not particularly limited.

### (I-5) Other Layers

### (i) Black Coloring Material Layer

The thermal transfer recording sheet preferably has three types of coloring material layers including a yellow coloring material layer, a magenta coloring material layer, and a cyan coloring material layer, and may further have a conventionally known black coloring material layer as a coloring material layer. The black coloring material layer can be formed using a black coloring material or a composition containing existing yellow coloring material, magenta coloring material, and cyan coloring material, and the above-described compounds of General Formulae (1) and (2) may also be contained in the black coloring material layer.

### (I-6) Method for Producing Thermal Transfer Recording Sheet

The method for producing the thermal transfer recording sheet is not particularly limited, and the thermal transfer recording sheet can be produced, for example, as described below. As an example, the yellow coloring material layer will be described.

First, compounds represented by General Formulae (1) and (2) (coloring materials), and, if necessary, a binder resin, a surfactant, and a wax are gradually added to a medium (for example, an organic solvent) while stirring, so as to be sufficiently mixed with the medium.

At this time, mechanical shearing force is applied using a disperser to stably dissolve or disperse these components in the form of fine particles in the medium, thereby preparing a coloring material composition (ink). The desired coloring material layer can be produced by applying this coloring material composition to a base film serving as the substrate and then drying the composition.

The disperser used in preparing the coloring material composition is not particularly limited, and examples thereof include rotary shear homogenizers, media-type dispersers such as ball mills, sand mills, and attritors, and high-pressure counter-collision dispersers.

In the thermal transfer recording sheet, the respective coloring material layers are sequentially arranged on one surface of the substrate. For example, a yellow coloring material layer, a magenta coloring material layer, a cyan coloring material layer, and a protective layer can be repeatedly formed on the substrate (substrate sheet) along the moving direction of the substrate. When a thermal transfer sheet having the coloring material layers in this order is used, a yellow image is first formed, then a magenta image is formed, and further a cyan image is formed. Through this series of image formation, one full-color image is formed. Finally, the protective layer is formed, and this series of image formation is repeated. Coloring material layers other than these coloring material layers may also be appropriately added, and, for example, a black coloring material layer (black heat-meltable layer) may be added on the substrate.

The coloring material layer can be formed by applying a coloring material composition for each layer to the substrate and drying the composition. The method for applying the composition for each layer onto the substrate is not particularly limited, and examples thereof include methods using a bar coater, a gravure coater, a reverse roll coater, a rod coater, or an air doctor coater. Among these, a coating method using a gravure coater, which facilitates adjustment of the film thickness, is preferred.

The drying conditions after applying the coloring material composition for each layer are not particularly limited as long as sufficient drying can be performed. For example, drying can be performed at a temperature in the range of 50°C or higher and 120°C or lower for 1 second or more and 5 minutes or less.

When each dye composition is sufficiently dried, the occurrence of background staining and set-off of the dye ink during winding can be easily prevented, and retransfer of the set-off dye ink to a coloring material layer of a different hue during rewinding can also be easily prevented.

From the viewpoint of transferability, the coloring material composition is preferably applied in such an amount that the thickness of the coloring material layer after drying is in the range of 0.1 µm or more and 5 µm or less.

### (I-7) Method for Using Thermal Transfer Recording Sheet

The thermal transfer recording sheet is superposed on a transfer-receiving body, for example, an image-receiving sheet having a coloring material-receiving layer on a surface thereof, and is heated using a heating method such as a thermal head, so that the coloring material in the sheet is transferred to the image-receiving sheet, thereby forming an image. When the thermal transfer recording sheet has the above-described transferable protective layer, the sheet portion of the protective layer is superposed on the image formed on the image-receiving sheet. Then, the protective layer can be transferred (formed) onto the image by heating using a heating method such as a thermal head.

The heating means for heating the thermal transfer recording sheet for image recording is not particularly limited, and infrared radiation or laser light can be used in addition to a conventional method using a thermal head. In addition, an electrically heated film that generates heat by passing electricity through the base film of the substrate itself may be used, so that the sheet can also be used as an electrically energized dye transfer sheet.

### EXAMPLES

The present invention will be described in further detail below with reference to Examples and Comparative Examples, but the present invention is not limited to these Examples. Unless otherwise specified, the term "part(s)" is based on mass.

### <Examples of First Embodiment>

### [Compounds Represented by General Formulae (1) and (2)]

The above-described compounds represented by General Formulae (1) and (2) were synthesized by known methods. The compounds represented by General Formulae (1) and (2) used in these Examples are listed in Table 1-1.

The obtained compounds were identified using a ¹H nuclear magnetic resonance (¹H-NMR) spectrometer (trade name: "AVANCE-600 NMR spectrometer", manufactured by BRUKER) and a MALDI-TOF/MS instrument (trade name: "MALDI-TOF/MS ultraFleXtreme", manufactured by BRUKER).

### [Comparative Compounds]

The following Comparative Compounds (1) to (5) were used as comparative compounds.

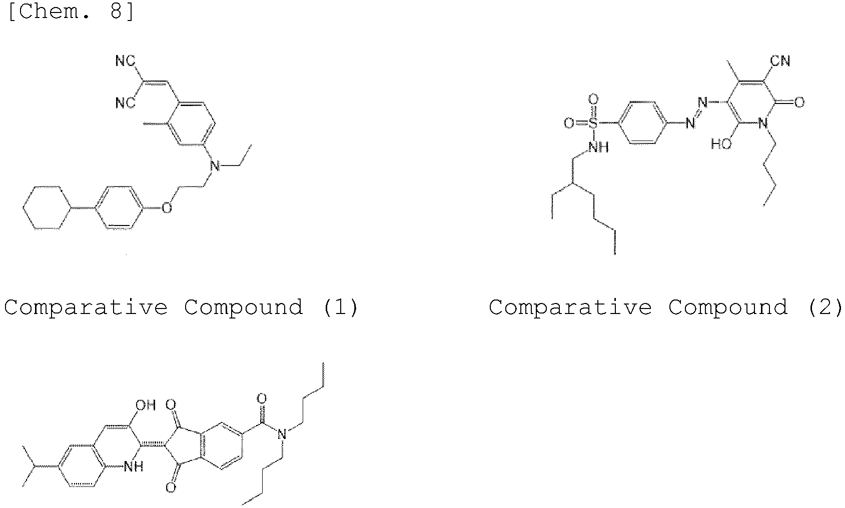

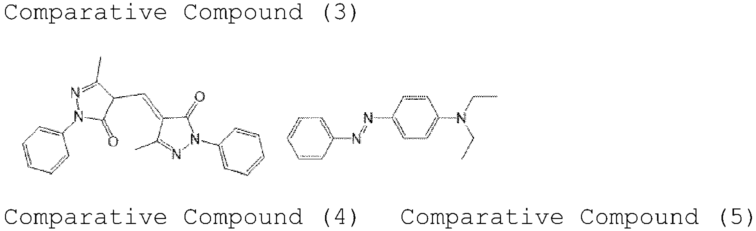

### [Examples 1-1 to 1-11 and Comparative Examples 1-1 to 1-12]

### [Preparation of Aqueous Dispersion of Resin Particles (A)]

In a reaction vessel, 466 parts of monomers (50% styrene, 47% acrylonitrile, and 3% methacrylic acid) were added to and mixed with 1,178 parts of water at 70°C, and a polymerization initiator (an aqueous solution of 1.9 parts of potassium persulfate in 659 parts of water) was added dropwise over 60 minutes. The mixture was further stirred at 70°C for 30 minutes to obtain an aqueous solution of core resin particles.

Next, the aqueous solution of core resin particles was heated to 80°C, and 80 parts of a monomer mixed solution (85% styrene and 15% methacrylic acid) and a polymerization initiator (an aqueous solution prepared by adding 0.1 parts of potassium persulfate to 133 parts of water) were added dropwise over 10 minutes. The mixture was further stirred for 120 minutes to synthesize resin particles (A) having a shell coating on the core resin, that is, a core-shell structure.

Next, an appropriate amount of an 8 mol/L aqueous potassium hydroxide solution was added to the reaction vessel to adjust the pH of the liquid to 8.5. A total of 29 parts of powders of the compounds listed in Table 1-1 (the mixing ratios of the compounds being as listed in Table 1-1), corresponding to 5% based on the resin particles, and 29 parts of ethanol/butanol (8/2) were added, and the mixture was heated to 80°C. Thereafter, the mixture was stirred for 2 hours. The solvent was removed by evaporation under reduced pressure, and then an appropriate amount of an 8 mol/L aqueous potassium hydroxide solution was added to the reaction vessel to adjust the pH of the liquid to 8.5. Water was added so that the content of the resin particles was 20%, thereby preparing an aqueous dispersion (A) of resin particles.

### [Preparation of Aqueous Dispersion (B) of Resin Particles]

Under a nitrogen atmosphere, 100 parts of monomers (30% styrene, 30% n-butyl acrylate, and 40% methacrylic acid) were added to and mixed with 100 parts of methyl ethyl ketone at 78°C in a reaction vessel, and a polymerization initiator (a mixed liquid of 1 part of azobisisobutyronitrile and 20 parts of methyl ethyl ketone) was added dropwise over 2 hours. After the reaction was further allowed to proceed for 2 hours, the mixture was cooled to 30°C, and then 100 parts of dimethylethanolamine and 100 parts of water were added. Thereafter, the solvent was removed by evaporation under reduced pressure to obtain a resin particle solution (B).

Separately, under a nitrogen atmosphere, an aqueous solution prepared by adding 1 part of sodium bicarbonate and 1 part of sodium lauryl sulfate to 178 parts of water was heated to 80°C, and 1 part of potassium persulfate was further added. A solution prepared by adding, to 178 parts of water, 200 parts of methyl methacrylate, 140 parts of butyl acrylate, 5 parts of glycidyl methacrylate, a total of 5 parts of the compounds listed in Table 1-1 (the mixing ratios of the compounds being as listed in Table 1-1), and 6 parts of sodium lauryl sulfate was added dropwise thereto over 2 hours. Thereafter, 119 parts of the resin particle solution (B) obtained above was added dropwise over 30 minutes, and then 35 parts of a 1% aqueous ammonium persulfate solution was added dropwise over 30 minutes. The mixture was allowed to react at 80°C for 2 hours to obtain an aqueous dispersion (B) of resin particles having a solid content concentration of 40%.

### [Preparation of Ink]

Fifty parts of the aqueous dispersion (A) or (B) of resin particles, 10 parts of glycerol, 10 parts of triethylene glycol, 1 part of Acetylenol E100 (manufactured by Kawaken Fine Chemicals Co., Ltd.), and 35 parts of water were mixed and stirred, and then pressure-filtered through a microfilter having a pore size of 3.0 µm (manufactured by Fujifilm Corporation) to prepare each ink listed in Table 1-1. The pH of each prepared ink was within the range of 8.5 to 9.0.

### [Evaluation of Storage Stability of Aqueous Dispersion of Resin Particles]

The aqueous dispersion of resin particles (A) or (B) was sealed and stored at 10°C for one month, and the presence or absence of aggregates and precipitates after storage was visually checked. The results are listed in Table 1-1.

The evaluation criteria are as follows. In the evaluation, storage stability was determined to be good when "almost no aggregates or precipitates of the compound were observed" or "small amounts of aggregates or precipitates of the compound were observed".
A: Almost no aggregates or precipitates of the compound were observed.
B: Small amounts of aggregates or precipitates of the compound were observed.
C: Considerable amounts of aggregates or precipitates of the compound were observed.

### [Evaluation of Light Fastness of Printed Matter (Image-Recorded Product)]

### [Preparation of Image Sample]

Each prepared ink was filled into an ink cartridge, and an image was recorded using an ink jet recording apparatus (trade name: "PIXUS Pro-10", manufactured by CANON KABUSHIKI KAISHA) to obtain a monochrome image sample.

### [Method for Evaluating Light Fastness]

Each obtained monochrome image sample was placed in a xenon test apparatus (trade name: "Atlas Ci4000", manufactured by Suga Test Instruments Co., Ltd.) and exposed for 24 hours under conditions of an irradiance of 0.28 W/m² at 340 nm, a temperature of 40°C, and a relative humidity of 50%.

The reflection density of each monochrome image sample before and after exposure was measured using a reflection densitometer FD-7 (trade name, manufactured by Konica Minolta, Inc.).

When the initial chromaticities before exposure were denoted as a₀^{*}, b₀^{*}, and L₀^{*}, and the chromaticities after exposure were denoted as a*, b*, and L*, the color difference ΔE was defined and calculated as follows. [Math. 1] $Δ E = \sqrt{{\left(a*-{a}_{0}*\right)}^{2} + {\left(b*-{b}_{0}*\right)}^{2} + {\left(L*-{L}_{0}*\right)}^{2}}$

The evaluation criteria are as follows. In the evaluation, light fastness was determined to be good when ΔE after 20 hours was less than 7.

### [Evaluation Criteria]

A: $ΔE < 5$
B: $5 \leq ΔE < 7$
C: $7 \leq ΔE$

**[Table 1-1]**

| | | Aqueous dispersion of resin particles | Compound | | | Mixing ratio: compound of General Formula (1)/compound of General Formula (2) or comparative compound | Evaluation of storage stability of ink | Evaluation of light fastness of printed matter | |
|---|---|---|---|---|---|---|---|---|---|
| | | | Compound of General Formula (1) | Compound of General Formula (2) | Comparative compound | | 10°C, 1 month | ΔE after 24 hours | Evaluation |
| Example 1-1 | Ink (1) | (B) | Compound 1-2 | Compound 2-1 | - | 10/40 | A | 6.58 | B |
| Example 1-2 | Ink (2) | (B) | Compound 1-2 | Compound 2-4 | - | 10/10 | A | 5.47 | B |
| Example 1-3 | Ink (3) | (A) | Compound 1-2 | Compound 2-4 | - | 10/40 | A | 1.56 | A |
| Example 1-4 | Ink (4) | (B) | Compound 1-2 | Compound 2-4 | - | 10/40 | A | 1.01 | A |
| Example 1-5 | Ink (5) | (A) | Compound 1-2 | Compound 2-4 | - | 10/50 | A | 1.34 | A |
| Example 1-6 | Ink (6) | (B) | Compound 1-2 | Compound 2-4 | - | 10/50 | A | 1.52 | A |
| Example 1-7 | Ink (7) | (B) | Compound 1-2 | Compound 2-11 | - | 10/5 | A | 6.21 | B |
| Example 1-8 | Ink (8) | (B) | Compound 1-4 | Compound 2-1 | - | 10/30 | A | 1.36 | A |
| Example 1-9 | Ink (9) | (B) | Compound 1-4 | Compound 2-4 | - | 10/15 | A | 1.52 | A |
| Example 1-10 | Ink (10) | (B) | Compound 1-5 | Compound 2-4 | - | 10/35 | A | 1.41 | A |
| Example 1-11 | Ink (11) | (B) | Compound 1-5 | Compound 2-11 | - | 10/25 | A | 1.77 | A |
| Comparative Example 1-1 | Comparative ink (1) | (B) | Compound 1-2 | - | - | 10/0 | C | 0.98 | A |
| Comparative Example 1-2 | Comparative ink (2) | (A) | - | Compound 2-4 | - | 0/10 | B | 22.30 | C |
| Comparative Example 1-3 | Comparative ink (3) | (B) | Compound 1-2 | - | Comparative compound (1) | 10/50 | C | 13.40 | C |
| Comparative Example 1-4 | Comparative ink (4) | (B) | Compound 1-2 | - | Comparative compound (2) | 10/50 | C | 16.20 | C |
| Comparative Example 1-5 | Comparative ink (5) | (B) | Compound 1-2 | - | Comparative compound (3) | 10/40 | C | 7.80 | B |
| Comparative Example 1-6 | Comparative ink (6) | (B) | Compound 1-2 | - | Comparative compound (4) | 10/40 | C | 8.80 | C |
| Comparative Example 1-7 | Comparative ink (7) | (B) | Compound 1-2 | - | Comparative compound (5) | 10/40 | C | 9.70 | B |
| Comparative Example 1-8 | Comparative ink (8) | (B) | Compound 1-4 | - | - | 10/0 | C | 1.78 | A |
| Comparative Example 1-9 | Comparative ink (9) | (B) | Compound 1-5 | - | - | 10/0 | C | 1.22 | A |
| Comparative Example 1-10 | Comparative ink (10) | (B) | Compound 1-4 | - | Comparative compound (3) | 10/35 | C | 8.23 | B |
| Comparative Example 1-11 | Comparative ink (11) | (B) | Compound 1-5 | - | Comparative compound (5) | 10/35 | C | 9.67 | B |
| Comparative Example 1-12 | Comparative ink (12) | (A) | | Compound 2-11 | Comparative compound (2) | 0/10 | C | 24.5 | C |

As is clear from Table 1-1, the inks containing resin particles dyed with a combination of the compounds of General Formulae (1) and (2) described in the Examples had good storage stability, and the light fastness of the printed matter thereof was improved. In contrast, the comparative inks containing resin particles dyed with a compound of General Formula (1) or (2) alone, or resin particles dyed with comparative compounds having structures different from those of General Formulae (1) and (2), were poor in storage stability or light fastness.

### [Example 1-12]

### [Preparation of Aqueous Dispersion (C) of Resin Particles]

An aqueous dispersion (C) of resin particles having a solid content concentration of 40% was prepared in the same manner as in the preparation of the aqueous dispersion (B) of resin particles in Example 1-1, except that 10 parts of Adekastab LA-36 (manufactured by Adeka Corporation) was additionally used together with a total of 5 parts of the compounds listed in Table 1-1 (the mixing ratios of the compounds being as listed in Table 1-1).

The storage stability of this aqueous dispersion of resin particles was evaluated as A. An image sample was prepared, and the light fastness of the printed matter was then evaluated. The evaluation results gave a ΔE of 2.21 after 24 hours, indicating improved light fastness.

### <Preparation of Ink for Oil-Based Writing Instruments>

### [Example 1-13]

To a mixed solution of 78 parts of 1-phenoxy-2-propanol and 22 parts of benzyl alcohol, 9 parts of Elec BL-1 (manufactured by Sekisui Chemical Co., Ltd.) as a resin and 1 part of polyvinylpyrrolidone resin K-90 (manufactured by Nippon Shokubai Co., Ltd.) were added, followed by heating to 70°C to dissolve the resins. Thereafter, the solution was cooled to room temperature, and 3 parts of Compound 1-2, which is a compound represented by General Formula (1), and 12 parts of Compound 2-1, which is a compound represented by General Formula (2), were added as colorants, together with 3 parts of Plysurf A208N. The mixed solution was dispersed for 3 hours using an attritor (manufactured by Mitsui Mining Co., Ltd.) to prepare Ink (1) for oil-based writing instruments.

### [Comparative Example 1-13-1]

Comparative Oil-Based Ink (1) for writing instruments was prepared in the same manner as in Example 1-13, except that only 15 parts of Compound 1-2, which is a compound represented by General Formula (1), was used as the colorant.

### [Comparative Example 1-13-2]

Comparative Oil-Based Ink (2) for writing instruments was prepared in the same manner as in Example 1-13, except that only 15 parts of Compound 2-1, which is a compound represented by General Formula (2), was used as the colorant.

### <Evaluation of Storage Stability of Ink for Oil-Based Writing Instruments>

Each of the inks for oil-based writing instruments obtained above was added in an amount of 20 mL to a separate 50 mL sample bottle, and the sample bottles were sealed and left to stand at 60°C for one month. After standing, the surface state was observed at 20× magnification using a phase-contrast microscope (trade name: "BX53", manufactured by Olympus Corporation). Observation results indicated that aggregation of particles was observed when the compound of General Formula (1) or (2) was used alone, whereas no aggregation was observed when both the compound of General Formula (1) and the compound of General Formula (2) were used. This indicated that the use of both the compound represented by General Formula (1) and the compound represented by General Formula (2) results in an improvement in storage stability.

### <Production of Oil-Based Writing Instrument and Evaluation of Light Fastness>

Each of the oil-based inks for writing instruments obtained above was filled into a separate ink storage tube formed of a polypropylene tube having an inner diameter of 1.2 mm and a length of 140 mm. A ballpoint pen for evaluation testing equipped with this ink storage tube and a phosphor bronze tip was produced (ball diameter: 0.7 mm), and a 2 cm × 2 cm image sample was prepared under a constant writing pressure.

The obtained image sample was placed in a xenon test apparatus (Atlas Weather-Ometer Ci4000, manufactured by Toyo Seiki Seisaku-sho, Ltd.). After placement, the image sample was exposed for 10 hours under conditions of an irradiance of 0.28 W/m² at 340 nm, a black panel temperature of 40°C, and a relative humidity of 50%. Comparison between the case where either the compound represented by General Formula (1) or the compound represented by General Formula (2) was used alone and the case where both compounds represented by General Formulae (1) and (2) were used revealed that the residual ratio (%) of optical density (O.D.) was 10% higher in the latter case, indicating improved light fastness.

The O.D. residual ratio (%) is a rate of change in Yellow O.D. between the initial value and the value after 10 hours, as measured using a reflection densitometer for image samples (trade name: "FD-7", manufactured by Konica Minolta, Inc.).

### <Preparation of Ink for Water-Based Writing Instruments>

### [Example 1-14]

First, 3 parts of Compound 1-2, which is a compound represented by General Formula (1), and 12 parts of Compound 2-1, which is a compound represented by General Formula (2), were added as colorants, together with 0.6 parts of Plysurf A208N (manufactured by DKS Co., Ltd.), 1 part of methanol, and 0.5 parts of Rheocrysta I-2AX, which is cellulose nanofibers (manufactured by DKS Co., Ltd.), and then 99 parts of ion-exchanged water was added. The internal temperature was raised to 80°C, and the mixture was stirred for 2 hours while removing methanol. The mixture was allowed to cool to room temperature and was then subjected to dispersion treatment with a homogenizer for 5 minutes to prepare Water-Based Ink (1) for writing instruments.

### [Comparative Example 1-14-1]

Comparative Oil-Based Ink (1) for writing instruments was prepared in the same manner as in Example 9, except that only 15 parts of Compound 1-2, which is a compound represented by General Formula (1), was used as the colorant in Example 1-14.

### [Comparative Example 1-14-2]

Comparative Oil-Based Ink (2) for writing instruments was prepared in the same manner as in Example 1-14, except that only 15 parts of Compound 2-1, which is a compound represented by General Formula (2), was used as the colorant in Example 9.

### <Evaluation of Storage Stability of Ink for Water-Based Writing Instruments>

Each of the inks for water-based writing instruments obtained above was added in an amount of 20 mL to a separate 50 mL sample bottle, and the sample bottles were sealed and left to stand at 60°C for one month. After standing, the surface state was observed at 20× magnification using a phase-contrast microscope (trade name: "BX53", manufactured by Olympus Corporation). Observation results indicated that aggregation of particles was observed when the compound of General Formula (1) or (2) was used alone, whereas no aggregation was observed when both the compound of General Formula (1) and the compound of General Formula (2) were used. This indicated that the use of both the compound represented by General Formula (1) and the compound represented by General Formula (2) results in an improvement in storage stability.

### <Production of Water-Based Writing Instrument and Evaluation of Light Fastness>

The obtained ink for water-based writing instruments was filled into an ink storage tube formed of a polypropylene tube having an inner diameter of 1.2 mm and a length of 140 mm. A ballpoint pen for evaluation testing equipped with this ink storage tube and a phosphor bronze tip was produced (ball diameter: 0.7 mm), and a 2 cm × 2 cm image sample was prepared under a constant writing pressure.

The obtained image sample was placed in a xenon test apparatus (trade name: "Atlas Weather-Ometer Ci4000", manufactured by Toyo Seiki Seisaku-sho, Ltd.). After placement, the image sample was exposed for 10 hours under conditions of an irradiance of 0.28 W/m² at 340 nm, a black panel temperature of 40°C, and a relative humidity of 50%. After exposure, comparison between the case where either the compound represented by General Formula (1) or the compound represented by General Formula (2) was used alone and the case where both compounds represented by General Formulae (1) and (2) were used revealed that the O.D. residual ratio (%) was 8.5% higher in the latter case, indicating improved light fastness.

The O.D. residual ratio (%) was determined in the same manner as in Example 1-13.

### <Examples of Second Embodiment>

### [Compounds Represented by General Formulae (1) and (2)]

The above-described compounds represented by General Formulae (1) and (2) were synthesized by known methods. The compounds represented by General Formulae (1) and (2) used in these Examples are listed in Table 2-1.

The obtained compounds were identified using a ¹H nuclear magnetic resonance (¹H-NMR) spectrometer (trade name: "AVANCE-600 NMR spectrometer", manufactured by BRUKER) and a MALDI-TOF/MS instrument (trade name: "MALDI-TOF/MS ultraFleXtreme", manufactured by BRUKER).

### [Comparative Compound]

The following comparative compound was used.

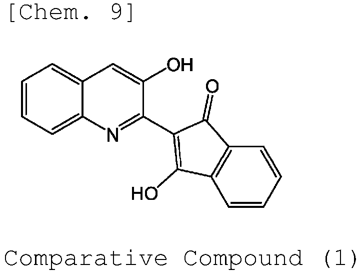

### (Examples 2-1 to 2-11 and Comparative Examples 2-1 to 2-6)

### [Production of Ink]

A total of 2 parts of the compounds listed in Table 2-1 (the mixing ratios of the compounds being as listed in Table 2-1), 16 parts of water, 0.8 parts of a dispersant (trade name: "DisperBYK 190", manufactured by BYK), and 80 parts of zirconia beads having a diameter of 0.2 mm were placed in a zirconia container and dispersed at 300 rpm for 4 hours using a planetary ball mill. The dispersion liquid was diluted with a 15% aqueous glycerol solution to adjust the solid content concentration to 5%, and then filtered through a 0.5 µm filter to obtain an ink.

### [Printing Step onto Transfer Paper]

A modified Canon printer equipped with a piezo-type recording head was loaded with the ink, and a solid image was printed at 100% duty on sublimation transfer paper (trade name: "LUCY", manufactured by Dairiki Co., Ltd.).

### [Transfer Step onto Fabric]

After the obtained solid image was dried, the solid image was transferred to a polyester fabric (polyester amunzen, manufactured by Tajimaya) using a heat press machine (trade name: "Air Fusion", manufactured by STAHLS') at a heat press pressure of 60 SPI and the heat press temperature listed in Table 2-1.

### <Evaluation>

### (Evaluation of Yellow Optical Density)

For the polyester fabrics produced at a heat press temperature of 200°C in the examples and comparative examples, the yellow optical density (O.D.) of each image obtained at the respective press temperature was measured using a reflection densitometer (trade name: "FD-7", manufactured by Konica Minolta, Inc.). The measurement results were subjected to density evaluation according to the following evaluation criteria. The evaluation results are listed in the column "Y density" in Table 2-1. In the evaluation, the optical density was determined to be high when the yellow O.D. was 1.50 or more.

### [Evaluation Criteria]

A: The yellow O.D. is 1.70 or more.
B: The yellow O.D. is 1.50 or more and less than 1.70.
C: The yellow O.D. is less than 1.50.

### (Evaluation of Color Development Stability During Heat Pressing)

The color development stability during heat pressing was calculated using the following equations. The yellow optical density (O.D.) of the image at each heat press temperature was measured in the same manner as in the above-described evaluation of yellow optical density, except that the heat press temperature was varied.
· Color development stability (%) during heat pressing at 180°C to 210°C = |yellow O.D. during heat pressing at 210°C - yellow O.D. during heat pressing at 180°C| (absolute value)
· Color development stability (%) during heat pressing at 190°C to 200°C = |yellow O.D. during heat pressing at 200°C - yellow O.D. during heat pressing at 190°C| (absolute value)

The obtained results were evaluated according to the following evaluation criteria. In the evaluation, color development stability was determined to be good when the difference in yellow O.D. (absolute value) was less than 0.50.

### [Evaluation Criteria]

A: The difference in yellow O.D. (absolute value) is less than 0.30.
B: The difference in yellow O.D. (absolute value) is 0.30 or more and less than 0.50.
C: The difference in yellow O.D. (absolute value) is 0.50 or more.

**[Table 2-1]**

| | Compound (aqueous dispersion) | | | Mixing ratio: compound of General Formula (1)/compound of General Formula (2)/comparative compound | O.D. at heat press temperature | | | | Y density (200°C) | color development stability during heat pressing | | | |
|---|---|---|---|---|---|---|---|---|---|---|---|---|---|
| | | | | | 180°C | 190°C | 200°C | 210°C | Evaluation | Difference between 180°C and 210°C | | Difference between 190°C and 200°C | |
| | Compound of General Formula (1) | Compound of General Formula (2) | Comparative compound | | | | | | | Value | Evaluation! | Value | Evaluation |
| Example 2-1 | Compound 1-2 | Compound 2-1 | - | 10/3510 | 1.70 | 1.71 | 1.70 | 1.69 | A | 0.01 | A | 0.01 | A |
| Example 2-2 | Compound 1-2 | Compound 2-4 | - | 10/10/0 | 1.45 | 1.73 | 1.72 | 1.75 | A | 0.30 | B | 0.01 | A |
| Example 2-3 | Compound 1-2 | Compound 2-4 | - | 1013010 | 1.68 | 1.69 | 1.71 | 1.68 | A | 0.00 | A | 0.02 | A |
| Example 2-4 | Compound 1-2 | Compound 2-4 | - | 10/40/0 | 1.67 | 1.68 | 1.72 | 1.69 | A | 0.02 | A | 0.04 | A |
| Example 2-5 | Compound 1-2 | Compound | - | 10/50/0 | 1.50 | 1.70 | 1.70 | 1.73 | A | 0.23 | A | 0.00 | A |
| Example 2-6 | Compound 1-4 | Compound 2-11 | - | 10/30/0 | 1.51 | 1.68 | 1.70 | 1.71 | A | 0.20 | A | 0.02 | A |
| Example 2-7 | Compound 1-2 | Compound 2-11 | - | 10/5/0 | 1.40 | 1.72 | 1.72 | 1.80 | A | 0.40 | B | 0.00 | A |
| Example 2-8 | Compound 1-2 | Compound 2-1 | - | 10/90/0 | 1.23 | 1.65 | 1.64 | 1.66 | B | 0.43 | B | 0.01 | A |
| Example 2-9 | Compound 1-4 | Compound 2-1 | - | 10/30/0 | 1.51 | 1.69 | 1.71 | 1.71 | A | 0.20 | A | 0.02 | A |
| Example 2-10 | Compound 1-5 | Compound 2-4 | - | 10/20/0 | 1.30 | 1.65 | 1.64 | 1.66 | B | 0.36 | B | 0.01 | A |
| Example 2-11 | Compound 1-5 | Compound 2-11 | - | 10/70/0 | 1.35 | 1.50 | 1.62 | 1.68 | B | 0.33 | B | 0.03 | A |
| Comparative Example 2-1 | Compound 1-2 | - | | 10/0/0 | 0.99 | 1.19 | 1.49 | 1.49 | C | 0.50 | 0 | 0.30 | B |
| Comparative Example 2-2 | - | Compound 2-4 | - | 0/1010 | 0.80 | 0.91 | 1.35 | 1.40 | C | 0.60 | 0 | 0.44 | C |
| Comparative Example 2-3 | - | - | Comparative compound (1) | 0/0/10 | 1.01 | 1.10 | 1.43 | 1.46 | C | 0.45 | B | 0.33 | B |
| Comparative Example 2-4 | - | Compound 2-4 | Comparative compound (1) | 0/40/10 | 0.82 | 1.00 | 1.38 | 1.47 | C | 0.65 | C | 0.38 | B |
| Comparative Example 2-5 | - | Compound 2-1 | Comparative compound (1) | 0/40/10 | 0.78 | 0.90 | 1.41 | 1.48 | C | 0.70 | C | 0.51 | C |
| Comparative Example 2-6 | Compound 1-5 | - | Comparative compound (1) | 30/0/10 | 0.75 | 0.86 | 1.38 | 1.45 | C | 0.70 | C | 0.52 | C |

As is clear from Table 2-1, the use of an ink containing the compounds represented by General Formulae (1) and (2) made it possible to obtain an image-recorded product having high optical density and high thermal stability.

### [Example 2-12]

Two parts of the compound of Example 2-8, 1 part of Adekastab LA-36 (manufactured by Adeka Corporation), 15 parts of water, 0.8 parts of a dispersant (trade name: "DisperBYK 190", manufactured by BYK), and 80 parts of zirconia beads having a diameter of 0.2 mm were charged and dispersed at 300 rpm for 4 hours using a planetary ball mill. The dispersion was diluted with a 15% aqueous glycerol solution to adjust the solid content concentration to 5%, and then filtered through a 0.5 µm filter to obtain an ink.

This ink was evaluated for yellow optical density and color development stability during heat pressing in the same manner as in Example 2-8. The evaluation results are listed in Table 2-2 below. As described in Table 2-2, the evaluation results for Example 2-12 indicated a further improvement in color development stability during heat pressing as compared with those for Example 2-8.

**[Table 2-2]**

| | O.D. at heat press temperature | | | | Y density (200°C) | color development stability during heat pressing | | | |
|---|---|---|---|---|---|---|---|---|---|
| | 180°C | 190°C | 200°C | 210°C | Evaluation | Difference between 180°C and 210°C | | Difference between 190°C and 200°C | |
| | | | | | | Value | Evaluation | Value | Evaluation |
| Example 2-8 | 1.23 | 1.65 | 1.64 | 1.66 | B | 0.43 | B | 0.01 | A |
| Example 2-12 | 1.53 | 1.67 | 1.68 | 1.69 | B | 0.16 | A | 0.01 | A |

### <Examples of Third Embodiment>

### [Compounds Represented by General Formulae (1) and (2)]

The above-described compounds represented by General Formulae (1) and (2) were synthesized by known methods. The compounds represented by General Formulae (1) and (2) used in these examples are listed in Table 3-1.

The obtained compounds were identified using a ¹H nuclear magnetic resonance (¹H-NMR) spectrometer (trade name: "AVANCE-600 NMR spectrometer", manufactured by BRUKER) and a MALDI-TOF/MS instrument (trade name: "MALDI-TOF/MS ultraFleXtreme", manufactured by BRUKER).

### [Comparative Compounds]

The following Comparative Compounds (1) to (5) were used as comparative compounds.

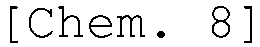

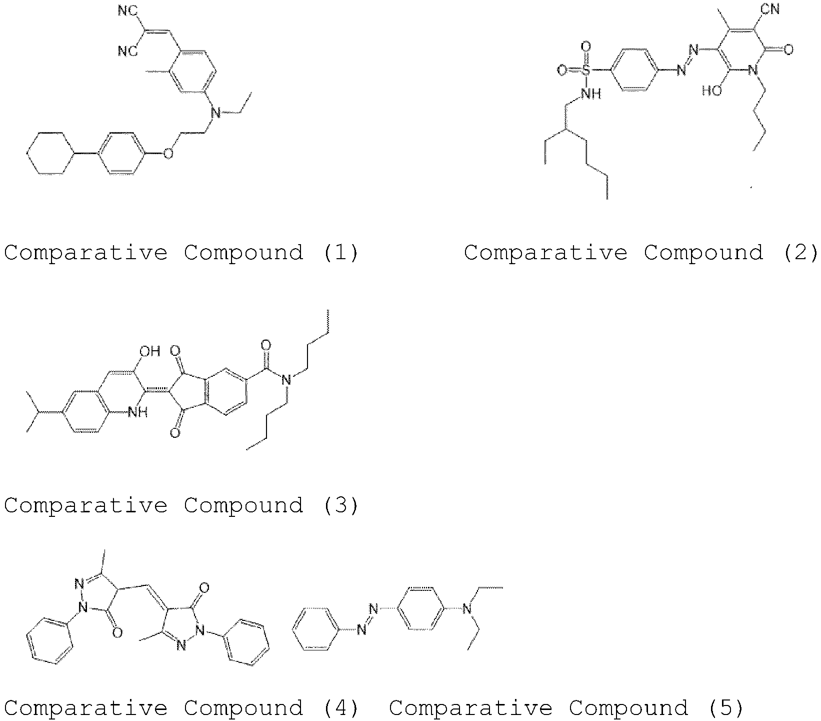

### [Examples 3-1 to 3-15 and Comparative Examples 3-1 to 3-13]

### (I) Thermal Transfer Recording Sheet

### [Preparation of Each Coloring Material Composition]

### <Preparation of Coloring Material Composition>

Five parts of a polyvinyl butyral resin (trade name: "KS-3", manufactured by Sekisui Chemical Co., Ltd.) was gradually added to and dissolved in a mixed solution of 45 parts of methyl ethyl ketone and 45 parts of toluene. Five parts of a compound given in Table 3-1 below was added to and dissolved in this solution to obtain a coloring material composition.

### [Production of Thermal Transfer Recording Sheet]

A polyethylene terephthalate film having a thickness of 4.5 µm (trade name: "Lumirror", manufactured by Toray Industries, Inc.) was used as a substrate, and the above coloring material composition was applied to the substrate and then dried to produce a thermal transfer recording sheet including a yellow coloring material layer with a thickness of 1 µm after drying.

### [Preparation of Image Sample]

The produced thermal transfer recording sheet including the yellow coloring material layer was used, and a monochrome image was transferred to recording paper with a modified machine under the trade name "Selphy", manufactured by CANON KABUSHIKI KAISHA) (the amount of heat supplied for thermal transfer being reduced to about 80%), thereby preparing Image Samples (1) to (15) obtained when Coloring Material Compositions (1) to (15) were used and Comparative Image Samples (1) to (13) obtained when Comparative Coloring Material Compositions (1) to (13) were used.

The color measurement of the image samples was performed using a reflection densitometer (trade name: "FD-7", manufactured by Konica Minolta, Inc.).

### [Evaluation]

### [Evaluation of Storage Stability of Ink (Coloring Material Composition)]

Each of the coloring material compositions used in Examples 3-1 to 3-15 and Comparative Examples 3-1 to 3-13 was placed in a separate 100 mL mayonnaise bottle, and the bottles were tightly sealed and stored at 10°C for one month. After storage, the presence or absence of aggregates was visually checked. The results are listed in Table 3-1.

The evaluation criteria are as follows. In the evaluation, storage stability was determined to be good when "almost no aggregates of the compound were observed" or "small amounts of aggregates of the compound were observed".

### [Evaluation Criteria]

A: Almost no aggregates of the compound were observed.
B: Small amounts of aggregates of the compound were observed.
C: Considerable amounts of aggregates of the compound were observed.

### [Evaluation of Light Fastness of Printed Matter (Image-Recorded Product)]

Each of the monochrome image samples obtained in Examples 3-1 to 3-15 and Comparative Examples 3-1 to 3-13 was placed in a xenon test apparatus (trade name: "Atlas Ci4000", manufactured by Suga Test Instruments Co., Ltd.) and exposed for 20 hours under conditions of an irradiance of 0.28 W/m² at 340 nm, a temperature of 40°C, and a relative humidity of 50%.

The reflection density of the printed matter was measured before and after the test.

When the initial chromaticities were denoted as a₀^{*}, b₀^{*}, and L₀^{*}, and the chromaticities after exposure were denoted as a^{*}, b^{*}, and L^{*}, the color difference ΔE was defined and calculated as follows. [Math. 2] $Δ E = \sqrt{{\left(a*-{a}_{0}*\right)}^{2} + {\left(b*-{b}_{0}*\right)}^{2} + {\left(L*-{L}_{0}*\right)}^{2}}$

The evaluation criteria are as follows. In the evaluation, light fastness was determined to be good when ΔE after 20 hours was less than 7.

### [Evaluation Criteria]

A: $ΔE < 5$
B: $5 \leq ΔE < 7$
C: $7 \leq ΔE$

**[Table 3-1]**

| | | Compound | | | Mixing ratio: compound of General Formula (1)/compound of General Formula (2) or comparative compound | Evaluation of storage stability of ink | Evaluation of light fastness of printed matter | |
|---|---|---|---|---|---|---|---|---|
| | | Compound of General Formula (1) | Compound of General Formula (2) | Comparative compound | | 10°C, 1 month | ΔE after 20 hours | Evaluation |
| Example 3-1 | Coloring material composition (1) | Compound 1-2 | Compound 2-1 | - | 10/40 | A | 6.11 | B |
| Example 3-2 | Coloring material composition (2) | Compound 1-2 | Compound 2-4 | - | 10/10 | A | 5.52 | B |
| Example 3-3 | Coloring material composition (3) | Compound 1-2 | Compound 2-4 | - | 10/30 | A | 1.34 | A |
| Example 3-4 | Coloring material composition (4) | Compound 1-2 | Compound 2-4 | - | 10/40 | A | 0.92 | A |
| Example 3-5 | Coloring material composition (5) | Compound 1-2 | Compound 2-4 | - | 10/50 | A | 1.11 | A |
| Example 3-6 | Coloring material composition (6) | Compound 1-2 | Compound 2-4 | - | 10/70 | A | 6.83 | B |
| Example 3-7 | Coloring material composition (7) | Compound 1-2 | Compound 2-8 | - | 10/40 | A | 4.32 | A |
| Example 3-8 | Coloring material composition (8) | Compound 1-2 | Compound 2-10 | - | 10/50 | A | 6.89 | B |
| Example 3-9 | Coloring material composition (9) | Compound 1-2 | Compound 2-11 | - | 10/5 | A | 0.21 | B |
| Example 3-10 | Coloring material composition (10) | Compound 1-3 | Compound 2-4 | - | 10/50 | A | 4.38 | A |
| Example 3-11 | Coloring material composition (11) | Compound 1-4 | Compound 2-4 | - | 10/40 | A | 3.25 | A |
| Example 3-12 | Coloring material composition (12) | Compound 1-4 | Compound 2-8 | - | 10/40 | A | 4.25 | A |
| Example 3-13 | Coloring material composition (13) | Compound 1-4 | Compound 2-10 | - | 10/50 | A | 6.03 | B |
| Example 3-14 | Coloring material composition (14) | Compound 1-5 | Compound 2-8 | - | 10130 | A | 4.45 | A |
| Example 3-15 | Coloring material composition (15) | Compound 1-5 | Compound 2-10 | - | 10/40 | A | 6.55 | B |
| Comparative Example 3-1 | Comparative coloring material composition (1) | Compound 1-2 | - | - | 10/0 | C | 0.78 | A |
| Comparative Example 3-2 | Comparative coloring material composition (2) | - | Compound 2-4 | - | 0/10 | C | 20.50 | C |
| Comparative Example 3-3 | Comparative coloring material composition (3) | Compound 1-2 | - | Comparative compound (1) | 10/50 | C | 11.20 | C |
| Comparative Example 3-4 | Comparative coloring material composition (4) | Compound 1-2 | - | Comparative compound (2) | 10/40 | C | 10.90 | C |
| Comparative Example 3-5 | Comparative coloring material composition (5) | Compound 1-2 | - | Comparative compound (3) | 10/30 | C | 6.90 | B |
| Comparative Example 3-6 | Comparative coloring material composition (6) | Compound 1-2 | - | Comparative compound (4) | 10/40 | C | 7.09 | C |
| Comparative Example 3-7 | Comparative coloring material composition (7) | Compound 1-2 | - | Comparative compound (5) | 10/50 | C | 6.80 | B |
| Comparative Example 3-8 | Comparative coloring material composition (8) | Compound 1-4 | - | - | 10/0 | C | 1.01 | A |
| Comparative Example 3-9 | Comparative coloring material composition (9) | Compound 1-5 | - | - | 10/0 | C | 0.99 | A |
| Comparative Example 3-10 | Comparative coloring material composition (10) | - | Compound 2-1 | - | 0/10 | C | 22.35 | C |
| Comparative Example 3-11 | Comparative coloring material composition (11) | - | Compound 2-8 | - | 0/10 | C | 21.45 | C |
| Comparative Example 3-12 | Comparative coloring material composition (12) | - | Compound 2-10 | - | 0/10 | C | 20.66 | C |
| Comparative Example 3-13 | Comparative coloring material composition (13) | - | Compound 2-11 | - | 0/10 | C | 20.12 | C |

As is clear from Table 3-1, in the image samples formed using the thermal transfer recording sheets described in the examples, same-color mixing-induced fading of the yellow dyes in the yellow coloring material layer was inhibited, and thermal transfer recording sheets were obtained.

The present invention is not limited to the above embodiments, and various changes and modifications can be made within the spirit and scope of the present invention. Therefore, to apprise the public of the scope of the present invention, the following claims are made.

This application claims the benefit of Japanese Patent Application Nos. 2024-013021, 2024-013022, and 2024-013023 filed January 31, 2024, and Japanese Patent Application No. 2025-011690 filed January 27, 2025, which are hereby incorporated by reference herein in their entirety.

## Claims

1. An ink comprising:
a medium; and
carrier particles dyed with a compound represented by the following General Formula (1) and a compound represented by the following General Formula (2): 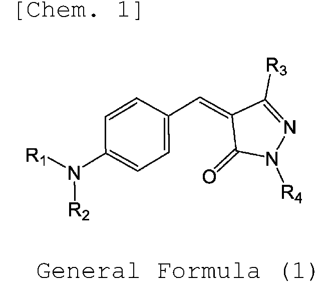 [wherein, in General Formula (1),
R₁ and R₂ each independently represent an alkyl group,
R₃ represents an alkyl group, an aryl group, or an alkoxy group, and
R₄ represents an alkyl group or an aryl group]; and 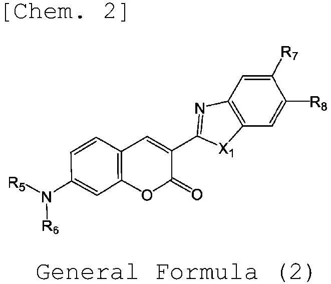
[wherein, in General Formula (2),
R₅ and R₆ each independently represent an alkyl group,
R₇ and R₈ each independently represent a hydrogen atom, an alkyl group, an aryl group, an alkoxy group, or a halogen atom,
X₁ represents O, S, or N-R₉, and R₉ represents a hydrogen atom or an alkyl group].

2. The ink according to claim 1, further comprising a dispersant.

3. The ink according to claim 1 or 2, further comprising a resin present in a dissolved state in the medium.

4. The ink according to any one of claims 1 to 3, for use in an oil-based writing instrument, a water-based writing instrument, or ink jet recording.

5. An ink comprising:
an aqueous medium;
a dispersant;
a compound represented by the following General Formula (1); and
a compound represented by the following General Formula (2): 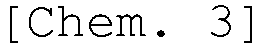 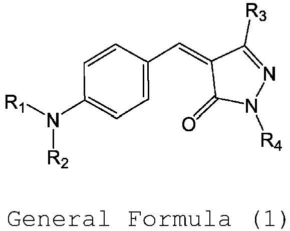 [wherein, in General Formula (1),
R₁ and R₂ each independently represent an alkyl group,
R₃ represents an alkyl group, an aryl group, or an alkoxy group, and
R₄ represents an alkyl group or an aryl group]; and 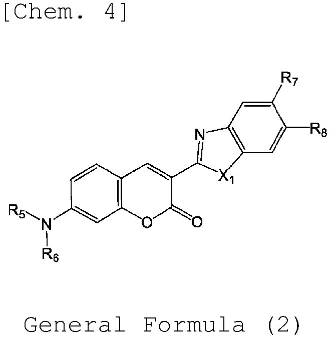 [wherein, in General Formula (2),
R₅ and R₆ each independently represent an alkyl group,
R₇ and R₈ each independently represent a hydrogen atom, an alkyl group, an aryl group, an alkoxy group, or a halogen atom,
X₁ represents O, S, or N-R₉, and R₉ represents a hydrogen atom or an alkyl group].

6. The ink according to claim 5, wherein the ink is aqueous.

7. The ink according to claim 5 or 6, for use in ink jet recording.

8. The ink according to any one of claims 1 to 7, wherein, in General Formula (1), R₁ and R₂ are each independently an alkyl group having 1 to 4 carbon atoms, and R₃ is an alkoxy group having 1 to 4 carbon atoms.

9. The ink according to any one of claims 1 to 8, wherein, in General Formula (2), R₅ and R₆ are each independently an alkyl group having 1 to 4 carbon atoms, and X₁ is O, N-H, or N-CH₃.

10. The ink according to any one of claims 1 to 9, wherein a mass ratio of the compound represented by General Formula (1) to the compound represented by General Formula (2) is such that the compound represented by General Formula (2) is present in an amount of 5 parts by mass or more and 90 parts by mass or less relative to 10 parts by mass of the compound represented by General Formula (1).

11. The ink according to any one of claims 1 to 10, wherein a mass ratio of the compound represented by General Formula (1) to the compound represented by General Formula (2) is such that the compound represented by General Formula (2) is present in an amount of 10 parts by mass or more and 70 parts by mass or less relative to 10 parts by mass of the compound represented by General Formula (1).

12. The ink according to any one of claims 1 to 11, wherein a mass ratio of the compound represented by General Formula (1) to the compound represented by General Formula (2) is such that the compound represented by General Formula (2) is present in an amount of 30 parts by mass or more and 50 parts by mass or less relative to 10 parts by mass of the compound represented by General Formula (1).

13. A thermal transfer recording sheet comprising:
a substrate; and
a yellow coloring material layer disposed on the substrate,
wherein the yellow coloring material layer contains a compound represented by the following General Formula (1) and a compound represented by the following General Formula (2): 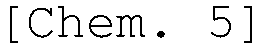 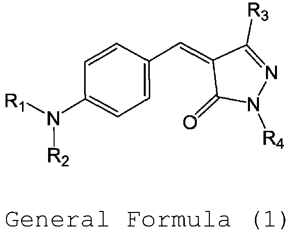 [wherein, in General Formula (1),
R₁ and R₂ each independently represent an alkyl group,
R₃ represents an alkyl group, an aryl group, or an alkoxy group, and
R₄ represents an alkyl group or an aryl group]; and 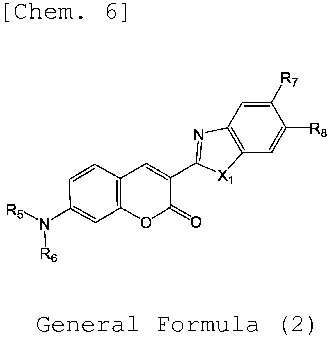 [wherein, in General Formula (2),
R₅ and R₆ each independently represent an alkyl group,
R₇ and R₈ each independently represent a hydrogen atom, an alkyl group, an aryl group, an alkoxy group, or a halogen atom,
X₁ represents O, S, or N-R₉, and R₉ represents a hydrogen atom or an alkyl group].

14. The thermal transfer recording sheet according to claim 13, further comprising a magenta coloring material layer and a cyan coloring material layer, wherein the yellow coloring material layer, the magenta coloring material layer, and the cyan coloring material layer are sequentially arranged on one surface of the substrate.

15. The thermal transfer recording sheet according to claim 13 or 14, wherein, in General Formula (1), R₁ and R₂ are each independently an alkyl group having 1 to 4 carbon atoms, and R₃ is an alkoxy group having 1 to 4 carbon atoms.

16. The thermal transfer recording sheet according to any one of claims 13 to 15, wherein, in General Formula (2), R₅ and R₆ are each independently an alkyl group having 1 to 4 carbon atoms, and X₁ is O, N-H, or N-CH₃.

17. The thermal transfer recording sheet according to any one of claims 13 to 16, wherein a mass ratio of the compound represented by General Formula (1) to the compound represented by General Formula (2) is such that the compound represented by General Formula (2) is present in an amount of 5 parts by mass or more and 90 parts by mass or less relative to 10 parts by mass of the compound represented by General Formula (1).

18. The thermal transfer recording sheet according to any one of claims 13 to 17, wherein a mass ratio of the compound represented by General Formula (1) to the compound represented by General Formula (2) is such that the compound represented by General Formula (2) is present in an amount of 10 parts by mass or more and 70 parts by mass or less relative to 10 parts by mass of the compound represented by General Formula (1).

19. The thermal transfer recording sheet according to any one of claims 13 to 18, wherein a mass ratio of the compound represented by General Formula (1) to the compound represented by General Formula (2) is such that the compound represented by General Formula (2) is present in an amount of 30 parts by mass or more and 50 parts by mass or less relative to 10 parts by mass of the compound represented by General Formula (1).
